# EUROPEAN PATENT SPECIFICATION

(11) **EP 3 294 001 B1**
(45) Date of publication and mention of the grant of the patent: **05.05.2021**
(21) Application number: 15900727.7
(22) Date of filing: 11.08.2015
(51) Int. Cl.: H04L 5/00, H04W 28/06, H04W 88/08

(54) **DIGITAL FRONTHAUL DATA TRANSMISSION METHOD, DEVICE AND SYSTEM**
VERFAHREN, VORRICHTUNG UND SYSTEM ZUR ÜBERTRAGUNG DIGITALER FRONTHAUL-DATEN
PROCÉDÉ, DISPOSITIF ET SYSTÈME DE TRANSMISSION DE DONNÉES DE LIAISON DE RACCORDEMENT AUX SITES CELLULAIRES NUMÉRIQUES

(43) Date of publication of application: 14.03.2018
(73) Proprietor: Huawei Technologies Co., Ltd., Longgang District Shenzhen, Guangdong 518129 (CN)
(72) Inventor: JIANG, Hongli, Shenzhen Guangdong 518129 (CN); CAI, Meng, Shenzhen Guangdong 518129 (CN); LI, Kun, Shenzhen Guangdong 518129 (CN)
(74) Representative: Maiwald Patent- und Rechtsanwaltsgesellschaft mbH
(86) International application number: PCT/CN2015/086671
(87) International publication number: WO 2017/024529

(56) References cited:
- EP-A1- 2 099 183
- CN-A- 1 622 659
- CN-A- 104 272 858
- CN-B- 102 118 191
- US-A1- 2002 147 978
- US-B1- 6 304 624

## Description

### TECHNICAL FIELD

The present invention relates to the communications field, and in particular, to a digital fronthaul data transmission method, device, and system.

### BACKGROUND

With continuous development of mobile communications technologies, base station products are increasingly diverse, among which distributed base stations have been widely used because of advantages such as low costs, strong adaptability to environment, and easy construction. A core concept of a structure of a distributed base station is separating a baseband unit (BBU) and a remote radio unit (RRU) that are of a traditional macro base station, and the baseband unit and the remote radio unit are connected by using an optical fiber or a cable.

Data transmitted between the BBU and the RRU may include common information and radio signal information. The common information is mainly used to implement functions such as control, management, timing, and synchronization. The radio signal information may include one or more pieces of antenna-carrier in-phase/quadrature (I/Q) data, where the antenna-carrier I/Q data is a digital sample of a baseband I/Q signal of a radio carrier signal transmitted or received by an antenna. The common information and the radio signal information may constitute digital fronthaul data in a wireless network according to a standard open interface protocol, and the digital fronthaul data may be transmitted in both directions between the BBU and the RRU by using an optical fiber or a cable. However, in areas such as cities, remote areas, or special areas (for example, a river) in which optical fibers and cables cannot be laid, microwaves are needed to transmit digital fronthaul data between the BBU and the RRU. CN 102118191 B describes methods and devices transmitting common public radio interface data. The methods include: receiving general public wireless interface data; performing synchronous processing on the common public wireless interface data to generate a common public wireless interface superframe header indication signal.

In the prior art, a solution to transmitting digital fronthaul data by using a microwave is provided, which is specifically: first, a transmit end parses digital fronthaul data to obtain, by means of separation, radio signal information and common information that are included in the digital fronthaul data; then, digital modulation and up-conversion processing are performed on the common information to form a first radio carrier signal, the radio signal information is separated to obtain at least one piece of antenna-carrier I/Q data, and up-conversion processing is separately performed on the at least one piece of antenna-carrier I/Q data obtained by means of separation, to form at least one second radio carrier signal; finally, the formed first radio carrier signal and at least one second radio carrier signal are sent to a receive end in a frequency division multiplexing manner by using a microwave air interface.

The prior art has at least the following problems: In the prior art, because combined transmission is performed on the first radio carrier signal and the at least one second radio carrier signal in a frequency division multiplexing manner, and in this transmission manner, a microwave channel on which the radio signal information is transmitted is different from a microwave channel on which the common information is transmitted, damage to the microwave channels is also different. Therefore, when quality of the transmitted radio signal information is reduced because of damage to the microwave channel caused by multipath, phase noise, frequency offset, I/Q imbalance, or the like, it is extremely difficult to compensate, by using a channel parameter determined according to the common information, for the damage to the microwave channel on which the radio signal information is transmitted, and consequently, system performance of a distributed base station is degraded.

### SUMMARY

The present invention provides a digital fronthaul data transmission method and a device as defined by the independent claims, which resolve the following problem: When quality of transmitted radio signal information is reduced because of damage to a microwave channel caused by multipath, phase noise, frequency offset, I/Q imbalance, or the like, it is extremely difficult to compensate, by using a channel parameter determined according to common information, for the damage to the microwave channel on which the radio signal information is transmitted, and consequently, system performance of a distributed base station is degraded.

To achieve the foregoing objective, the technical solutions represented by the appended claims are provided. Further aspects of the invention are presented according to the appended dependent claims.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an architecture diagram of a system in which a method provided in an embodiment of the present invention is applied according to the present invention;
FIG. 2 is a flowchart of a digital fronthaul data transmission method according to an embodiment of the present invention;
FIG. 3 is a schematic structural diagram of a microwave air interface frame according to an embodiment of the present invention;
FIG. 4 is a flowchart of a digital fronthaul data receiving method according to another embodiment of the present invention;
FIG. 5 is a schematic diagram of a CPRI protocol stack according to an embodiment of the present invention;
FIG. 6 is a schematic structural diagram of a CPRI primary frame according to an embodiment of the present invention;
FIG. 7 is a schematic composition diagram of a CPRI 10 ms frame according to an embodiment of the present invention;
FIG. 8 is a schematic diagram of a sub-channel of a super frame according to an embodiment of the present invention;
FIG. 9 is a schematic composition diagram of a first microwave device according to another embodiment of the present invention;
FIG. 10 is a schematic composition diagram of another first microwave device according to another embodiment of the present invention;
FIG. 11 is a schematic composition diagram of still another first microwave device according to another embodiment of the present invention;
FIG. 12 is a schematic composition diagram of a second microwave device according to another embodiment of the present invention;
FIG. 13 is a schematic composition diagram of another second microwave device according to another embodiment of the present invention;
FIG. 14 is a schematic composition diagram of still another second microwave device according to another embodiment of the present invention;
FIG. 15 is a schematic composition diagram of a first microwave device according to another embodiment of the present invention; and
FIG. 16 is a schematic composition diagram of a second microwave device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. The protection scope of the present invention is exclusively defined by the appended claims.

It is known to all that a core concept of a structure of a distributed base station is separating a BBU and an RRU that are of a traditional macro base station, and the BBU and the RRU are connected by using an optical fiber or a cable. Data transmitted between the BBU and the RRU may be referred to as digital fronthaul data (the digital fronthaul data may include common information and radio signal information), that is, the digital fronthaul data may be transmitted in both directions between the BBU and the RRU by using an optical fiber or a cable. In addition, with the development of radio access technologies, a transmission rate of digital fronthaul data becomes increasingly high and may be higher in the future, and because of a large bandwidth and a high rate of an optical fiber, generally, the optical fiber is used in the industry to transmit the digital fronthaul data.

In microwave (MW) transmission, there is no need to lay an optical fiber or a cable, and instead, data is directly transmitted by using space; therefore, construction advantages are obvious in cities, remote areas, or special areas, and microwaves are used to transmit digital fronthaul data between the BBU and the RRU.

In the solution, provided in the prior art, in which digital fronthaul data transmission is implemented by using microwaves, digital fronthaul data transmission is performed in a frequency division multiplexing manner. In this transmission manner, because a microwave channel on which radio signal information is transmitted is different from a microwave channel on which common information is transmitted, damage to the microwave channels is also different. Therefore, when quality of the transmitted radio signal information is reduced because of damage to the microwave channel caused by multipath, phase noise, frequency offset, I/Q imbalance, or the like, it is extremely difficult to compensate, by using a channel parameter determined according to the common information, for the damage to the microwave channel on which the radio signal information is transmitted, and consequently, system performance of a distributed base station is degraded.

To facilitate understanding by a person skilled in the art, a specific implementation process of technical solutions provided in the present invention is described by using the following embodiments in the present invention.

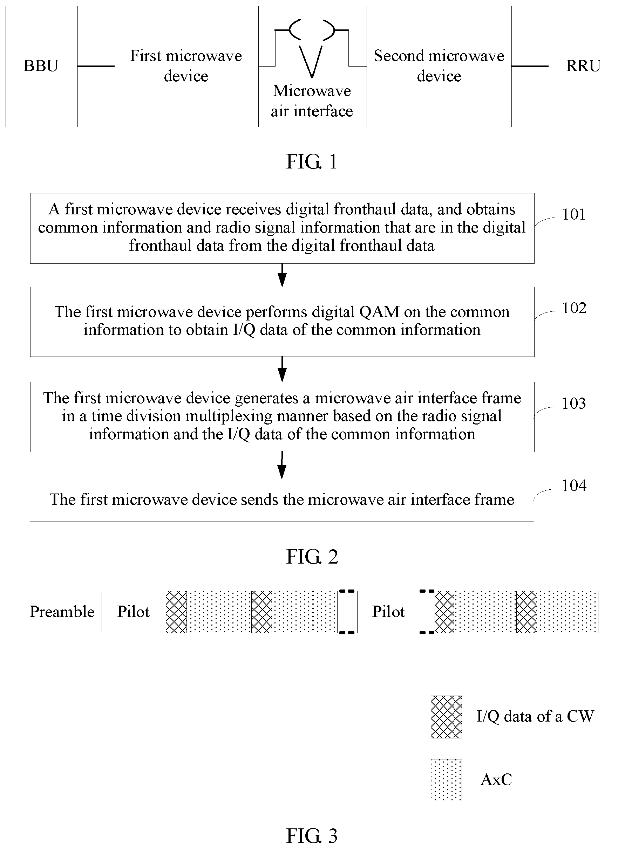

As shown in FIG. 1, an embodiment of the present invention provides an architecture diagram of a system in which a method provided in an embodiment of the present invention is applied, where the system includes a microwave device, a BBU, and an RRU. The microwave device is located between the BBU and the RRU, and specifically, the microwave device may include a first microwave device and a second microwave device. In addition, for ease of description, as shown in FIG. 1, in this embodiment of the present invention, a microwave device connected to the BBU is referred to as the first microwave device, and a microwave device connected to the RRU is referred to as the second microwave device.

In a system architecture shown in FIG. 1, in a possible implementation manner, the first microwave device may receive digital fronthaul data from the BBU, convert the received digital fronthaul data into a microwave radio frequency signal, and then send the microwave radio frequency signal to the second microwave device by using a microwave air interface; in this case, the second microwave device may receive the microwave radio frequency signal from the microwave air interface, restore the digital fronthaul data according to the received microwave radio frequency signal, and then send the digital fronthaul data to the RRU. In addition, alternatively, the microwave device may be integrated into the BBU and/or the RRU. Correspondingly, in this implementation manner, when the second microwave device is integrated into the RRU, the second microwave device may not reconstruct the digital fronthaul data, but directly transmit acquired radio signal information to a radio frequency sending unit of the RRU and send acquired common information to a control management unit of the RRU.

It should be noted that, in this embodiment of the present invention, roles of the second microwave device and the first microwave device may be interchanged. That is, in the system architecture shown in FIG. 1, in another possible implementation manner, the second microwave device may receive digital fronthaul data from the RRU, convert the received digital fronthaul data into a microwave radio frequency signal, and then send the microwave radio frequency signal to the first microwave device by using a microwave air interface; in this case, the first microwave device may receive the microwave radio frequency signal from the microwave air interface, restore the digital fronthaul data according to the received microwave radio frequency signal, and then send the digital fronthaul data to the BBU. In addition, when the first microwave device is integrated into the BBU, the first microwave device may not reconstruct the digital fronthaul data, but directly transmit acquired radio signal information to a baseband processing unit of the BBU and send acquired common information to a control management unit of the BBU.

To facilitate understanding by a person skilled in the art, the digital fronthaul data transmission method provided in the embodiments of the present invention may be applicable to the foregoing two possible implementation manners, and the present invention sets no limitation thereto.

An embodiment of the present invention provides a digital fronthaul data transmission method. As shown in FIG. 2, the method includes the following steps:
101. A first microwave device receives digital fronthaul data, and obtains common information and radio signal information from the digital fronthaul data.

The first microwave device may receive the digital fronthaul data from a BBU connected to the first microwave device, and process (for example, parse) the digital fronthaul data after receiving the digital fronthaul data, so as to obtain, by means of separation, the common information and the radio signal information that are included in the digital fronthaul data. The common information is mainly used to implement functions such as control, management, timing, and synchronization; the radio signal information may include one or more pieces of antenna-carrier I/Q data, where the antenna-carrier I/Q data is a digital sample of a baseband I/Q signal of a radio carrier signal transmitted or received by an antenna.

102. The first microwave device performs digital quadrature amplitude modulation (QAM) on the common information to obtain I/Q data of the common information.

After the first microwave device obtains, by means of separation, the common information and the radio signal information that are included in the digital fronthaul data, to reduce a microwave signal bandwidth required for digital fronthaul data transmission, digital QAM is performed on only the common information obtained by means of separation, to generate the I/Q data of the common information, and digital QAM modulation is not performed on the radio signal information obtained by means of separation. The I/Q data of the common information refers to I/Q data of the common information on which digital QAM modulation is performed.

103. The first microwave device generates a microwave air interface frame in a time division multiplexing manner based on the radio signal information and the I/Q data of the common information.

The radio signal information and the I/Q data of the common information are encapsulated in a payload area of the microwave air interface frame, and a pilot in a microwave overhead and the payload area are arranged at a preset interval in an interleaved manner.

Specifically, in order that, when quality of a transmitted signal is reduced because of damage to a microwave channel caused by multipath, phase noise, frequency offset, I/Q imbalance, or the like, a second microwave device can implement compensation for the damage to the microwave channel by using a microwave channel parameter estimated according to the pilot included in the microwave overhead, so as to improve the quality of the transmitted signal, the first microwave device may generate, according to microwave overhead data configured by a system, a microwave overhead that is known to the second microwave device and on which digital QAM is performed. The microwave overhead may be a random symbol bit preset on the first microwave device and the second microwave device. The microwave overhead may include a preamble and a pilot, where the preamble may be used to perform frame synchronization processing on the microwave air interface frame, the pilot may be used to estimate a microwave channel parameter, and the microwave channel parameter is used to perform channel damage compensation.

After obtaining the radio signal information by means of separation, and generating the I/Q data of the common information and the microwave overhead, the first microwave device may combine the pilot in the microwave overhead, the radio signal information, and the I/Q data of the common information in a time division multiplexing manner to generate the microwave air interface frame, so that the radio signal information, the I/Q data of the common information, and the microwave overhead are transmitted over one microwave channel. In addition, to improve performance of channel damage compensation, the radio signal information and the I/Q data of the common information may be evenly interleaved in the payload area of the microwave air interface frame, and the payload area and the pilot that is in the microwave overhead and used to estimate a microwave channel parameter may be also evenly arranged in an interleaved manner.

The common information and the radio signal information may constitute the digital fronthaul data according to a standard open interface protocol. Currently, a standard open interface protocol widely applied in the industry includes a common public radio interface (CPRI) and the Open Base Station Architecture Initiative (OBSAI). Function types and interface specifications of the two interface protocols are different, but the method provided in this embodiment of the present invention may be used to transmit digital fronthaul data of both the two interface protocols. For example, when the standard open interface protocol is the CPRI, the digital fronthaul data is referred to as a CPRI frame, the common information is referred to as a control word (CW), and the radio signal information is referred to as an antenna carrier (AxC); in this case, a frame structure of the generated microwave air interface frame may be shown in FIG. 3. An overhead of the microwave air interface frame includes at least two microwave overheads, that is, a preamble and a pilot, and a payload of the microwave air interface frame includes two payloads, that is, an AxC and I/Q data of a CW. For example, the preamble is located on first m (for example, m is 36) symbols of the microwave air interface frame, the pilot and a payload area of the microwave air interface frame are evenly arranged in an interleaved manner, each pilot may include x (for example, x is 1) symbols, the I/Q data of the CW and the AxC are evenly interleaved in the payload area of the microwave air interface frame, each common information location may include y (for example, y is 1) pieces of I/Q data of the CW, and each radio signal information location may include n (for example, n is 4) AxCs.

It can be learned that, the pilot and the payload area of the microwave air interface frame are evenly arranged in an interleaved manner, so that it is convenient for the second microwave device to use a microwave channel parameter obtained by means of estimation according to the pilot to perform channel damage compensation for the radio signal information and the I/Q data of the common information. Performance of channel damage compensation depends on a pilot interval, and a smaller interval leads to better compensation performance but requires a higher microwave signal bandwidth; therefore, the pilot interval may be designed (for example, a value of the pilot interval may be 32) according to a system performance requirement. The I/Q data of the common information and the radio signal information are evenly interleaved in the payload area of the microwave air interface frame, so that, on one hand, the common information may be used to estimate a microwave channel parameter, and on the other hand, a buffering amount required for a system may be reduced, and a system delay may be shortened.

104. The first microwave device sends the microwave air interface frame.

After generating the microwave air interface frame in a time division multiplexing manner based on the radio signal information and the I/Q data of the common information, the first microwave device may send the microwave air interface frame. For example, after processing, such as shaping and filtering, digital-to-analog conversion, and up-conversion, is performed on the microwave air interface frame, a microwave radio frequency signal may be generated, and then the microwave radio frequency signal may be sent by using a microwave air interface.

According to the digital fronthaul data transmission method provided in this embodiment of the present invention, a first microwave device generates a microwave air interface frame in a time division multiplexing manner based on radio signal information and I/Q data of common information, and arranges a pilot in a microwave overhead and a payload area at a preset interval in an interleaved manner, so that the radio signal information, the I/Q data of the common information, and the microwave overhead can be transmitted over one microwave channel, and when quality of the transmitted radio signal information is reduced because of damage to the microwave channel caused by multipath, phase noise, frequency offset, I/Q imbalance, or the like, a second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

In this embodiment of the present invention, further, step 103 specifically includes: generating, by the first microwave device, a transmit clock of the microwave air interface frame and a header indication signal of the microwave air interface frame; inserting, by the first microwave device, the preamble in the microwave overhead into a header location of the microwave air interface frame under the control of the transmit clock of the microwave air interface frame and the header indication signal of the microwave air interface frame; and encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame.

In this embodiment of the present invention, further, before the encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame, the digital fronthaul data transmission method may further include: buffering, by the first microwave device, the radio signal information, so as to adapt to a rate of the radio signal information in the payload area of the microwave air interface frame; and buffering, by the first microwave device, the I/Q data of the common information, so as to adapt to a rate of the I/Q data that is of the common information and in the payload area of the microwave air interface frame.

Correspondingly, the encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame may specifically include: reading, by the first microwave device, the buffered radio signal information and the buffered I/Q data of the common information, encapsulating the radio signal information and the I/Q data of the common information into the payload area of the microwave air interface frame, and arranging the pilot and the payload area at the preset interval in an interleaved manner, under the control of the transmit clock of the microwave air interface frame and the header indication signal of the microwave air interface frame.

In this embodiment of the present invention, further, in a first possible implementation manner, a synchronization clock processing manner may be used to generate the transmit clock of the microwave air interface frame and the header indication signal of the microwave air interface frame; in this case, the generating, by the first microwave device, a transmit clock of the microwave air interface frame and a header indication signal of the microwave air interface frame may specifically include: restoring, by the first microwave device, a digital fronthaul data clock from the digital fronthaul data, and tracking the digital fronthaul data clock to obtain the transmit clock of the microwave air interface frame; performing, by the first microwave device according to a frame protocol of the digital fronthaul data, frame synchronization processing on the digital fronthaul data under the control of the digital fronthaul data clock to generate a header indication signal of the digital fronthaul data; delaying, by the first microwave device, the header indication signal of the digital fronthaul data under the control of the digital fronthaul data clock, so that the delayed header indication signal of the digital fronthaul data is aligned with the I/Q data of the common information; and performing, by the first microwave device, N times frequency division processing on the delayed header indication signal of the digital fronthaul data under the control of the transmit clock of the microwave air interface frame to obtain the header indication signal of the microwave air interface frame, so that a frame period of the microwave air interface frame is N times longer than a frame period of the digital fronthaul data, so as to facilitate restoration of the digital fronthaul data by the second microwave device, where N is a positive integer.

A delay amount by which the header indication signal of the digital fronthaul data is delayed needs to ensure that an empty or full state does not occur in the buffered radio signal information and the buffered I/Q data of the common information.

In this embodiment of the present invention, further, when the synchronization clock processing manner is used to generate the transmit clock of the microwave air interface frame and the header indication signal of the microwave air interface frame, because a length of the radio signal information in the microwave air interface frame and a length of the I/Q data of the common information in the microwave air interface frame are fixed, the reading the buffered radio signal information and the buffered I/Q data of the common information, encapsulating the radio signal information and the I/Q data of the common information into the payload area of the microwave air interface frame, and arranging the pilot and the payload area at the preset interval in an interleaved manner, according to the uniform interpolation algorithm may specifically include:
generating, by the first microwave device, a first location indication signal according to a preset length of the payload area of the microwave air interface frame and a preset length of the pilot by using the uniform interpolation algorithm, where the first location indication signal is used to indicate a location of the pilot in the microwave air interface frame;
generating, by the first microwave device at a location in the microwave air interface frame except the location indicated by the first location indication signal, a second location indication signal according to the preset length of the payload area of the microwave air interface frame, the preset length of the pilot, and a preset length of the radio signal information by using the uniform interpolation algorithm, where the second location indication signal is used to indicate a location of the radio signal information in the payload area of the microwave air interface frame;
generating, by the first microwave device at a location in the microwave air interface frame except the location indicated by the first location indication signal and the location indicated by the second location indication signal, a third location indication signal according to the preset length of the payload area of the microwave air interface frame, the preset length of the pilot, the preset length of the radio signal information, and a preset length of the I/Q data of the common information by using the uniform interpolation algorithm, where the third location indication signal is used to indicate a location of the I/Q data of the common information into the payload area of the microwave air interface frame; and
inserting, by the first microwave device, the radio signal information and the I/Q data of the common information into the payload area of the microwave air interface frame, and arranging the pilot and the payload area in an interleaved manner, under the control of the first location indication signal, the second location indication signal, and the third location indication signal.

In addition, the first microwave device may further insert padding data or other service data into a surplus payload area according to the uniform interpolation algorithm.

The preset length of the payload area of the microwave air interface frame, the preset length of the pilot, the preset length of the radio signal information, and the preset length of the I/Q data of the common information may be preconfigured by the system.

In this embodiment of the present invention, the uniform interpolation algorithm used by the first microwave device may be a ∑-Δ algorithm.

In this embodiment of the present invention, further, in a second possible implementation manner, an asynchronous clock processing manner may be used to generate the transmit clock of the microwave air interface frame and the header indication signal of the microwave air interface frame; in this case, the generating, by the first microwave device, a transmit clock of the microwave air interface frame and a header indication signal of the microwave air interface frame may specifically include: generating, by the first microwave device, the transmit clock of the microwave air interface frame by using a local oscillator; and generating, by the first microwave device, the header indication signal of the microwave air interface frame according to a preset length of the microwave air interface frame under the control of the transmit clock of the microwave air interface frame.

In this embodiment of the present invention, further, when the asynchronous clock processing manner is used to generate the transmit clock of the microwave air interface frame and the header indication signal of the microwave air interface frame, a length of the radio signal information in the microwave air interface frame and a length of the I/Q data of the common information in the microwave air interface frame vary, and variations of the lengths depend on a difference between the digital fronthaul data clock and the transmit clock that is of the microwave air interface frame; therefore, the length of the radio signal information and the length of the I/Q data of the common information need to be calculated in real time according to a variation of a buffering depth (calculating the length of the radio signal information and the length of the I/Q data of the common information in real time may avoid a fault in the transmitted radio signal information and common information caused because a cache becomes empty or full due to the difference between the digital fronthaul data clock and the transmit clock that is of the microwave air interface frame). In this case, the reading the buffered radio signal information and the buffered I/Q data of the common information, encapsulating the radio signal information and the I/Q data of the common information into the payload area of the microwave air interface frame, and arranging the pilot and the payload area at the preset interval in an interleaved manner, according to the uniform interpolation algorithm may specifically include:
generating, by the first microwave device, a first location indication signal according to a preset length of the payload area of the microwave air interface frame and a preset length of the pilot by using the uniform interpolation algorithm, where the first location indication signal is used to indicate a location of the pilot in the microwave air interface frame;
calculating, by the first microwave device, the length of the radio signal information, and generating, at a location in the microwave air interface frame except the location indicated by the first location indication signal, a second location indication signal by using the uniform interpolation algorithm, according to the preset length of the payload area of the microwave air interface frame, the preset length of the pilot, and a variation of a data length of the buffered radio signal information, where the length of the radio signal information is used to indicate a length of the radio signal information in the payload area of the microwave air interface frame, and the second location indication signal is used to indicate a location of the radio signal information in the payload area of the microwave air interface frame;
calculating, by the first microwave device, the length of the I/Q data of the common information, and generating, at a location in the microwave air interface frame except the location indicated by the first location indication signal and the location indicated by the second location indication signal, a third location indication signal by using the uniform interpolation algorithm, according to the preset length of the payload area of the microwave air interface frame, the preset length of the pilot, the length of the radio signal information obtained by means of calculation, and a variation of a data length of the buffered I/Q data of the common information, where the length of the I/Q data of the common information is used to indicate a length of the I/Q data of the common information into the payload area of the microwave air interface frame, and the third location indication signal is used to indicate a location of the I/Q data of the common information into the payload area of the microwave air interface frame; and
inserting, by the first microwave device, the radio signal information and the I/Q data of the common information into the payload area of the microwave air interface frame, and arranging the pilot and the payload area in an interleaved manner, under the control of the first location indication signal, the second location indication signal, and the third location indication signal, where the length of the payload area of the microwave air interface frame is greater than the sum of the length of the pilot, the length of the radio signal information, and the length of the I/Q data of the common information.

In addition, the first microwave device may further insert padding data or other service data into a surplus payload area according to the uniform interpolation algorithm.

In this embodiment of the present invention, the uniform interpolation algorithm used by the first microwave device may be a ∑-Δ algorithm.

In this embodiment of the present invention, further, the microwave overhead may further include the length of the radio signal information and the length of the I/Q data of the common information.

In this embodiment of the present invention, further, step 103 may specifically include: inserting, by the first microwave device, the length of the radio signal information into a location after the preamble and before the payload area of the microwave air interface frame under the control of the transmit clock of the microwave air interface frame and the header indication signal of the microwave air interface frame; and inserting, by the first microwave device, the length of the I/Q data of the common information into a location after the preamble and before the payload area of the microwave air interface frame under the control of the transmit clock of the microwave air interface frame and the header indication signal of the microwave air interface frame.

In this embodiment of the present invention, further, to reduce a microwave signal bandwidth occupied when the common information is being transmitted, before step 102, the digital fronthaul data transmission method may further include: performing, by the first microwave device, compression processing on the common information, to reduce a bit rate of the common information and reduce the microwave signal bandwidth occupied when the common information is being transmitted, where compression processing on the common information may be implemented by deleting idle information, which is not specifically limited in this embodiment of the present invention.

Correspondingly, step 102 may specifically include: performing, by the first microwave device, digital QAM on the compressed common information to obtain the I/Q data of the common information.

In this embodiment of the present invention, further, to reduce a microwave signal bandwidth occupied when the radio signal information is being transmitted, before step 103, the digital fronthaul data transmission method may further include: obtaining, by the first microwave device, at least one piece of antenna-carrier I/Q data from the radio signal information; performing, by the first microwave device, compression processing on each piece of antenna-carrier I/Q data, to reduce an I/Q sampling rate and reduce the microwave signal bandwidth occupied when the radio signal information is being transmitted; and combining, by the first microwave device, the compressed antenna-carrier I/Q data to generate compressed radio signal information, where compression processing on the antenna-carrier I/Q data can be implemented by means of processing such as extraction or filtering, which is not specifically limited in this embodiment of the present invention.

Correspondingly, step 103 may specifically include: generating, by the first microwave device, the microwave air interface frame in a time division multiplexing manner based on the compressed radio signal information and the I/Q data of the common information.

In this embodiment of the present invention, further, when the first microwave device performs compression processing on the common information, to make the second microwave device perform decompression processing on received data by using a decompression method corresponding to the compression method used by the first microwave device, the microwave overhead may further include a compression parameter used when compression processing is being performed on the common information.

Correspondingly, step 103 may further specifically include: inserting, by the first microwave device into a location after the preamble and before the payload area of the microwave air interface frame under the control of the transmit clock of the microwave air interface frame and the header indication signal of the microwave air interface frame, the compression parameter used when compression processing is being performed on the common information.

It should be noted that, in this embodiment of the present invention, alternatively, the compression parameter used when compression processing is being performed on the common information may be preconfigured on the first microwave device and the second microwave device; in this case, the microwave overhead does not need to include the compression parameter used when compression processing is being performed on the common information.

In this embodiment of the present invention, further, when the first microwave device performs compression processing on the radio signal information, to make the second microwave device perform decompression processing on received data by using a decompression method corresponding to the compression method used by the first microwave device, the microwave overhead may further include a compression parameter used when compression processing is being performed on each piece of antenna-carrier I/Q data.

Correspondingly, step 103 may further specifically include: inserting, by the first microwave device into a location after the preamble and before the payload area of the microwave air interface frame under the control of the transmit clock of the microwave air interface frame and the header indication signal of the microwave air interface frame, the compression parameter used when compression processing is being performed on each piece of antenna-carrier I/Q data.

It should be noted that, in this embodiment of the present invention, alternatively, the compression parameter used when compression processing is being performed on each piece of antenna-carrier I/Q data may be preconfigured on the first microwave device and the second microwave device; in this case, the microwave overhead does not need to include the compression parameter used when compression processing is being performed on each piece of antenna-carrier I/Q data.

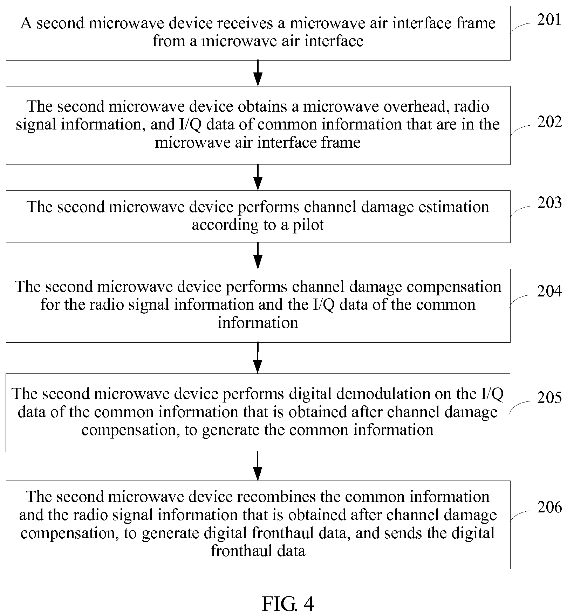

Another embodiment, which is not part of the present invention, provides a digital fronthaul data receiving method. As shown in FIG. 4, the method may include the following steps:

201. A second microwave device receives a microwave air interface frame from a microwave air interface.

The second microwave device may receive a microwave radio frequency signal from the microwave air interface, and after receiving the microwave radio frequency signal, perform processing such as down-conversion, analog-to-digital conversion, and filtering on the microwave radio frequency signal to generate the microwave air interface frame.

202. The second microwave device obtains a microwave overhead, radio signal information, and I/Q data of common information that are in the microwave air interface frame.

After receiving the microwave air interface frame, the second microwave device may parse the microwave air interface frame to extract the microwave overhead, the radio signal information, and the I/Q data of the common information that are included in the microwave air interface frame.

The microwave overhead may include a preamble and a pilot, where the preamble is used to perform frame synchronization processing on the microwave air interface frame, the pilot is used to estimate a microwave channel parameter, and the microwave channel parameter is used to perform channel damage compensation. In addition, to improve performance of channel damage compensation, the radio signal information and the I/Q data of the common information are encapsulated in a payload area of the microwave air interface frame, and the pilot in the microwave overhead and the payload area are arranged at a preset interval in an interleaved manner.

203. The second microwave device performs channel damage estimation according to a pilot.

In order that, when quality of a transmitted signal is reduced because of damage to a microwave channel caused by multipath, phase noise, frequency offset, I/Q imbalance, or the like, the second microwave device can implement compensation for the damage to the channel on which the signal is transmitted, so as to improve quality of the received signal, the second microwave device may perform channel damage estimation according to the pilot included in the extracted microwave overhead, to obtain the microwave channel parameter, where the microwave channel parameter may include but is not limited to at least one of the following: multipath, phase noise, frequency offset, or I/Q imbalance.

204. The second microwave device performs channel damage compensation for the radio signal information and the I/Q data of the common information.

A first microwave device generates the microwave air interface frame in a time division multiplexing manner based on the radio signal information and the I/Q data of the common information, and the pilot in the microwave overhead and the payload area are arranged at the preset interval in an interleaved manner, that is, the radio signal information, the I/Q data of the common information, and the microwave overhead are transmitted over one microwave channel; therefore, the microwave channel parameter obtained by means of channel damage estimation according to the microwave overhead may be used to perform channel damage compensation for the radio signal information and the I/Q data of the common information. For example, the second microwave device may perform channel damage compensation for the radio signal information and the I/Q data of the common information according to a preset compensation algorithm and the microwave channel parameter obtained in step 203.

In this embodiment, further, the preset compensation algorithm may include but is not limited to at least one of the following: a multipath balncing algorithm, a phase noise compensation algorithm, a frequency offset compensation algorithm, or an I/Q imbalance compensation algorithm.

205. The second microwave device performs digital demodulation on the I/Q data of the common information that is obtained after channel damage compensation, to generate the common information.

206. The second microwave device recombines the common information and the radio signal information that is obtained after channel damage compensation, to generate digital fronthaul data, and sends the digital fronthaul data.

After performing channel damage compensation for the I/Q data of the common information, performing digital demodulation to generate the common information, and performing channel damage compensation for the radio signal information, the second microwave device may recombine the generated common information and the radio signal information that is obtained after channel damage compensation, to generate the digital fronthaul data, and the second microwave device may send the generated digital fronthaul data to an RRU connected to the second microwave device.

According to the digital fronthaul data receiving method provided in this embodiment of the present invention, a first microwave device generates a microwave air interface frame in a time division multiplexing manner based on radio signal information and I/Q data of common information, and arranges a pilot in a microwave overhead and a payload area at a preset interval in an interleaved manner, that is, the radio signal information, the I/Q data of the common information, and the microwave overhead are transmitted over one microwave channel. In this way, when quality of the transmitted radio signal information is reduced because of damage to the microwave channel caused by multipath, phase noise, frequency offset, I/Q imbalance, or the like, a second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

In this embodiment, further, the preamble is located before the payload area of the microwave air interface frame.

In this embodiment, further, step 202 may specifically include: performing, by the second microwave device, frame synchronization processing on the microwave air interface frame according to the preamble in the microwave overhead to generate a header indication signal of the microwave air interface frame; and extracting, by the second microwave device, the pilot, the radio signal information, and the I/Q data of the common information according to a uniform interpolation algorithm under the control of the header indication signal of the microwave air interface frame.

In this embodiment, further, in a first possible implementation manner, when the first microwave device uses a synchronization clock processing manner to generate a transmit clock of the microwave air interface frame and the header indication signal of the microwave air interface frame, the extracting the pilot, the radio signal information, and the I/Q data of the common information according to a uniform interpolation algorithm may specifically include:
generating, by the second microwave device, a first location indication signal according to a preset length of the payload of the microwave air interface frame and a preset length of the pilot by using the uniform interpolation algorithm, where the first location indication signal is used to indicate a location of the pilot in the microwave air interface frame;
generating, by the second microwave device, a second location indication signal according to the preset length of the payload of the microwave air interface frame, the preset length of the pilot, and a preset length of the radio signal information by using the uniform interpolation algorithm, where the second location indication signal is used to indicate a location of the radio signal information in the payload area of the microwave air interface;
generating, by the second microwave device, a third location indication signal according to the preset length of the payload of the microwave air interface frame, the preset length of the pilot, the preset length of the radio signal information, and a preset length of the I/Q data of the common information by using the uniform interpolation algorithm, where the third location indication signal is used to indicate a location of the I/Q data of the common information into the payload area of the microwave air interface; and
extracting, by the second microwave device, the pilot, the radio signal information, and the I/Q data of the common information from the microwave air interface frame under the control of the first location indication signal, the second location indication signal, and the third location indication signal.

The preset length of the payload area of the microwave air interface frame, the preset length of the pilot, the preset length of the radio signal information, and the preset length of the I/Q data of the common information may be preconfigured by the system.

In this embodiment, further, in a second possible implementation manner, when the first microwave device uses an asynchronous clock processing manner to generate a transmit clock of the microwave air interface frame and the header indication signal of the microwave air interface frame, the extracting the pilot, the radio signal information, and the I/Q data of the common information according to a uniform interpolation algorithm may specifically include:
generating, by the second microwave device, a first location indication signal according to a preset length of the payload of the microwave air interface frame and a preset length of the pilot by using the uniform interpolation algorithm, where the first location indication signal is used to indicate a location of the pilot in the microwave air interface frame;
generating, by the second microwave device by using the uniform interpolation algorithm, a second location indication signal according to the preset length of the payload of the microwave air interface frame, the preset length of the pilot, and a length that is of the radio signal information and that is extracted from the microwave overhead, where the second location indication signal is used to indicate a location of the radio signal information in the payload area of the microwave air interface;
generating, by the second microwave device by using the uniform interpolation algorithm, a third location indication signal according to the preset length of the payload of the microwave air interface frame, the preset length of the pilot, the length that is of the radio signal information and that is extracted from the microwave overhead, and a length that is of the I/Q data of the common information and that is extracted from the microwave overhead, where the third location indication signal is used to indicate a location of the I/Q data of the common information into the payload area of the microwave air interface; and
extracting, by the second microwave device, the pilot, the radio signal information, and the I/Q data of the common information from the microwave air interface frame under the control of the first location indication signal, the second location indication signal, and the third location indication signal.

In this embodiment, further, to improve performance of compensation for a channel on which a signal is transmitted, when the second microwave device performs channel damage estimation, the method may further include: performing channel damage estimation according to the I/Q data of the common information.

Compensation performance of channel damage compensation performed by the second microwave device by using a microwave channel parameter obtained according to the pilot and the I/Q data of the common information is better than compensation performance of channel damage compensation performed by using the microwave channel parameter obtained according to the pilot. The microwave channel parameter obtained by the second microwave device according to the pilot may include phase noise and frequency offset, and a microwave channel parameter such as multipath or I/Q imbalance may be obtained according to one or two of the pilot and the I/Q data of the common information.

In this embodiment, further, before step 206, the digital fronthaul data receiving method may further include: buffering, by the second microwave device, the common information, so as to adapt to a rate of the common information in the digital fronthaul data; and buffering, by the second microwave device, the radio signal information obtained after channel damage compensation, so as to adapt to a rate of the radio signal information that is obtained after channel damage compensation and in the digital fronthaul data.

Correspondingly, that the second microwave device recombines the common information and the radio signal information that is obtained after channel damage compensation, to generate digital fronthaul data in step 206 may specifically include: generating, by the second microwave device, a transmit clock of the digital fronthaul data and a header indication signal of the digital fronthaul data; and reading, by the second microwave device according to a frame protocol of the digital fronthaul data under the control of the transmit clock of the digital fronthaul data and the header indication signal of the digital fronthaul data, the buffered common information and the buffered radio signal information that is obtained after channel damage compensation, to generate the digital fronthaul data.

In this embodiment, further, in a first possible implementation manner, when the first microwave device uses the synchronization clock processing manner to generate the transmit clock of the microwave air interface frame and the header indication signal of the microwave air interface frame, correspondingly, the generating, by the second microwave device, a transmit clock of the digital fronthaul data and a header indication signal of the digital fronthaul data may specifically include:
restoring, by the second microwave device, a microwave air interface frame clock from the microwave air interface frame, and tracking the microwave air interface frame clock to obtain the transmit clock of the digital fronthaul data; performing, by the second microwave device, frame synchronization processing on the microwave air interface frame under the control of the microwave air interface frame clock to generate the header indication signal of the microwave air interface frame; delaying, by the second microwave device, the header indication signal of the microwave air interface frame under the control of the microwave air interface frame clock, so that the delayed header indication signal of the microwave air interface frame is aligned with the common information obtained after digital demodulation; and performing, by the second microwave device, N times frequency multiplication on the delayed header indication signal of the microwave air interface frame under the control of the transmit clock of the digital fronthaul data, to generate the header indication signal of the digital fronthaul data, so that a frame period of the digital fronthaul data is 1/N of a frame period of the microwave air interface frame, where N is a positive integer.

A delay amount by which the header indication signal of the microwave air interface frame is delayed needs to ensure that an empty or full state does not occur in the buffered radio signal information and the buffered I/Q data of the common information.

In this embodiment, further, in a second possible implementation manner, when the first microwave device uses the asynchronous clock processing manner to generate the transmit clock of the microwave air interface frame and the header indication signal of the microwave air interface frame, correspondingly, the generating, by the second microwave device, a transmit clock of the digital fronthaul data and a header indication signal of the digital fronthaul data may specifically include:
controlling, by the second microwave device according to a variation of a data length of the buffered radio signal information obtained after channel damage compensation or a variation of a data length of the buffered common information, a local clock generator to generate the transmit clock of the digital fronthaul data; and generating, by the second microwave device, the header indication signal of the digital fronthaul data according to a frame protocol of the digital fronthaul data under the control of the transmit clock of the digital fronthaul data.

In this embodiment, further, the reading, by the second microwave device according to a frame protocol of the digital fronthaul data under the control of the transmit clock of the digital fronthaul data and the header indication signal of the digital fronthaul data, the buffered common information and the buffered radio signal information that is obtained after channel damage compensation, to generate the digital fronthaul data may specifically include: performing, by the second microwave device, synchronization on the common information read from a cache; and recombining, by the second microwave device according to the frame protocol of the digital fronthaul data under the control of the transmit clock of the digital fronthaul data and the header indication signal of the digital fronthaul data, the synchronized common information and the radio signal information that is obtained after channel damage compensation, to generate the digital fronthaul data.

In this embodiment, further, when the first microwave device performs compression processing on the common information to reduce a microwave signal bandwidth occupied when the common information is being transmitted, correspondingly, before step 206, the digital fronthaul data receiving method may further include: performing, by the second microwave device, decompression processing on the common information.

For example, when the first microwave device deletes idle information in the common information to achieve a purpose of compressing the common information, correspondingly, the second microwave device may insert, according to a compression parameter used when compression processing is being performed on the common information, the idle information into a location in which the first microwave device deletes the idle information, to restore an original bit rate of the common information.

Correspondingly, that the second microwave device recombines the common information and the radio signal information that is obtained after channel damage compensation, to generate digital fronthaul data in step 206 may specifically include: recombining, by the second microwave device, the decompressed common information and the radio signal information that is obtained after channel damage compensation, to generate the digital fronthaul data.

In this embodiment, further, when the first microwave device performs compression processing on the radio signal information to reduce a microwave signal bandwidth occupied when the radio signal information is being transmitted, correspondingly, before step 206, the digital fronthaul data receiving method may further include: obtaining, by the second microwave device, at least one piece of antenna-carrier I/Q data from the radio signal information obtained after channel damage compensation; performing, by the second microwave device, decompression processing on each piece of antenna-carrier I/Q data; and generating, by the second microwave device, decompressed radio signal information based on the decompressed antenna-carrier I/Q data. For example, when the first microwave device performs processing such as extraction or filtering to achieve a purpose of compressing the antenna-carrier I/Q data, correspondingly, the second microwave device may restore, by means of processing such as interpolation or filtering, an original sampling rate of the antenna-carrier I/Q data according to a compression parameter used when compression processing is being performed on the antenna-carrier I/Q data.

Correspondingly, that the second microwave device recombines the common information and the radio signal information that is obtained after channel damage compensation, to generate digital fronthaul data in step 206 may specifically include: recombining, by the second microwave device, the common information and the decompressed radio signal information to generate the digital fronthaul data.

In this embodiment, further, to make the second microwave device perform decompression processing on received data by using a decompression method corresponding to the compression method used by the first microwave device, the microwave overhead may further include a compression parameter used when compression processing is being performed on the common information, where the compression parameter used when compression processing is being performed on the common information is located after the preamble and before the payload area of the microwave air interface frame.

Correspondingly, the performing, by the second microwave device, decompression processing on the common information may specifically include: extracting, by the second microwave device, the compression parameter, in the microwave overhead, used when compression processing is being performed on the common information; and performing, by the second microwave device, decompression processing on the common information according to the compression parameter used when compression processing is being performed on the common information. Decompression processing on the common information may be implemented by adding idle information, which is not specifically limited in this embodiment of the present invention.

It should be noted that, in this embodiment, alternatively, the compression parameter used when compression processing is being performed on the common information may be preconfigured on the first microwave device and the second microwave device; in this case, the microwave overhead does not need to include the compression parameter used when compression processing is being performed on the common information. Correspondingly, the performing, by the second microwave device, decompression processing on the common information may specifically include: performing, by the second microwave device, decompression processing on the common information according to the preconfigured compression parameter used when compression processing is being performed on the common information.

In this embodiment, further, to make the second microwave device perform decompression processing on received data by using a decompression method corresponding to the compression method used by the first microwave device, the microwave overhead may further include a compression parameter used when compression processing is being performed on each piece of antenna-carrier I/Q data, where the compression parameter used when compression processing is being performed on each piece of antenna-carrier I/Q data is located after the preamble and before the payload area of the microwave air interface frame.

The performing, by the second microwave device, decompression processing on each piece of antenna-carrier I/Q data may specifically include: extracting, by the second microwave device, the compression parameter, in the microwave overhead, used when compression processing is being performed on each piece of antenna-carrier I/Q data; and performing, by the second microwave device, decompression processing on each piece of antenna-carrier I/Q data according to the compression parameter used when compression processing is being performed on each piece of antenna-carrier I/Q data. Decompression processing on the antenna-carrier I/Q data may be implemented by means of processing such as interpolation or filtering, which is not specifically limited in this embodiment.

It should be noted that, in this embodiment, alternatively, the compression parameter used when compression processing is being performed on each piece of antenna-carrier I/Q data may be preconfigured on the first microwave device and the second microwave device; in this case, the microwave overhead does not need to include the compression parameter used when compression processing is being performed on each piece of antenna-carrier I/Q data. Correspondingly, the performing, by the second microwave device, decompression processing on each piece of antenna-carrier I/Q data may specifically include: performing, by the second microwave device, decompression processing on each piece of antenna-carrier I/Q data according to the preconfigured compression parameter used when compression processing is being performed on each piece of antenna-carrier I/Q data.

An example in which common information and radio signal information constitute digital fronthaul data according to a CPRI specification is used to describe a specific process in the present invention.

Specifically, the first microwave device may convert a CPRI frame into a microwave air interface frame and send the microwave air interface frame to the second microwave device, by using a processing process described in step 101 to step 104; the second microwave device may receive the microwave air interface frame and restore the CPRI frame according to the received microwave air interface frame, by using a processing process described in step 201 to step 206. In addition, in this scenario, the digital fronthaul data is referred to as a CPRI frame, the common information is referred to as a CW, and the radio signal information is referred to as an AxC.

In a specific implementation process, the first microwave device may restore a CPRI clock from the CPRI frame by using a dedicated clock data restoration element and track the CPRI clock by using a phase-locked loop (PLL) to obtain a transmit clock of the microwave air interface frame. The second microwave device may restore a microwave air interface frame clock from the microwave air interface frame by using a symbol synchronization algorithm and track the microwave air interface frame clock by using the PLL, to obtain a transmit clock of the CPRI frame.

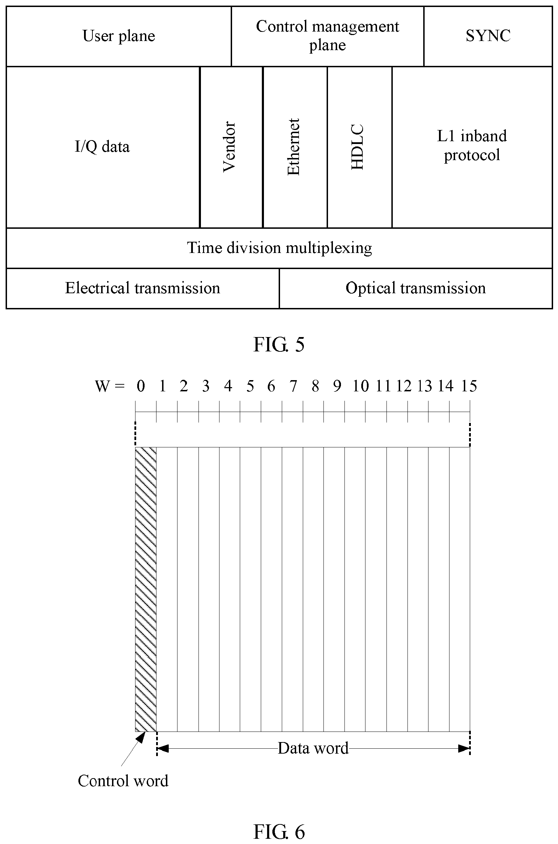

In the CPRI specification, an RRU is referred to as radio equipment (RE), a BBU is referred to as radio equipment control (REC). As shown in FIG. 5, a CPRI protocol stack may include three planes: a user plane, a control management plane (C&M Plane), and a synchronous plane (SYNC). The user plane is mainly used to transmit antenna-carrier I/Q data (refer to I/Q data shown in FIG. 5); the control management plane is mainly used to transmit control management data (refer to vendor specific data, Ethernet data, and High-Level Data Link Control (HDLC) data that are shown in FIG. 5); and the synchronous plane is mainly used to transmit synchronous and timing data (refer to L1 inband protocol data shown in FIG. 5). In addition, the foregoing data may be transmitted in a time division multiplexing manner, and the transmission may be classified into electrical transmission and optical transmission according to different transmission media.

A CPRI is a synchronous transmission link based on a specific frame structure, where a primary frame period of the synchronous transmission link is 1/3.84 MHz=260.416667 ns, one primary frame includes 16 words (W), the first word is a control word that is used to transmit control management plane data and synchronous plane data, and the second to the sixteenth words are data words that are used to transmit user plane data. Currently, a CPRI link rate has developed into 12165.12 Mbit/s from 614.4 Mbit/s, and a CPRI link at each rate is corresponding to a same CPRI frame structure but a different word length of a primary frame. For example, as shown in FIG. 6, FIG. 6 is a schematic structural diagram of a CPRI primary frame whose link rate is 1228.8 Mbit/s, where a period of the CPRI primary frame is 1/3.84 MHZ, and each word includes two bytes.

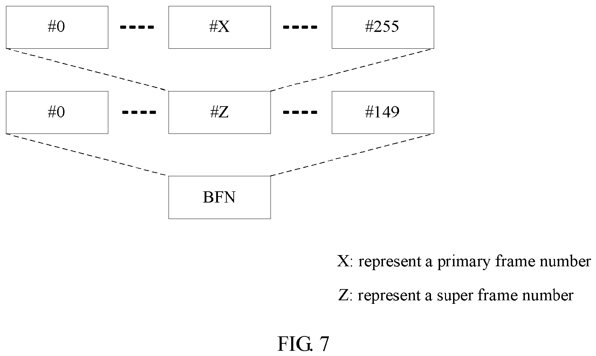

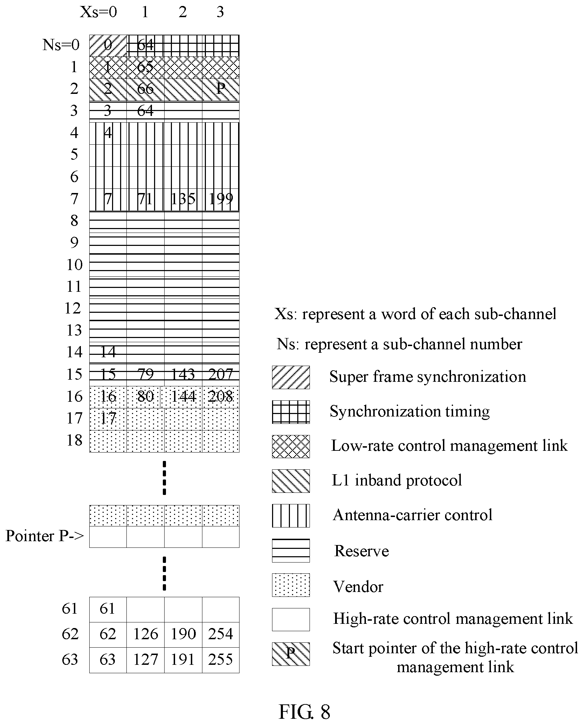

As shown in FIG. 7, each group of 256 primary frames may constitute one CPRI super frame, and 150 super frames constitute one CPRI 10 ms frame (a NodeB frame number (BFN) is used to represent a CPRI 10 ms frame). The 256 control words included in one super frame are classified into 64 sub-channels, each sub-channel is used to transmit control management plane data and synchronous plane data, and for data specifically transmitted on each sub-channel, refer to FIG. 8. It may be further seen from FIG. 8 that some sub-channels are reserved channels and vendor specific channels, and in an actual application, all these channels may be idle channels.

User plane data is mapped into a primary frame in a unit of an antenna carrier, one antenna carrier includes I/Q sampling data of one carrier of an antenna, and one primary frame may include multiple antenna carriers. A CPRI link may be configured, according to a link rate, an antenna-carrier sampling rate, and a sampling bit width that are of the CPRI link, as a link that carries one or more carriers of one or more antennas. For example, a CPRI link whose rate is 1228.8 Mbit/s may be configured as a link that carries one LTE carrier whose signal bandwidth is 20 MHz, sampling rate is 30.72 MHz, and sampling bit width is 15 bits, or may be configured as a link that carries eight CDMA carriers whose signal bandwidth is 5 MHz, sampling rate is 3.84 MHz, and sampling bit width is 14 bits.

An example in which a CPRI link whose rate is 1228.8 Mbit/s is carried by a microwave is used to describe a microwave signal bandwidth required for transmitting a CPRI frame by using the method provided in the present invention. It is assumed that the CPRI link is configured as a link that carries one LTE carrier whose signal bandwidth is 20 MHz, sampling rate is 30.72 MHz, and sampling bit width is 15 bits, and a frame period of a microwave air interface frame is designed as a period of a CPRI super frame, that is, N=256.

In a case in which the antenna-carrier I/Q data is not compressed, there are in total 8^{∗}256=2048 pieces of I/Q data in one microwave air interface frame; assuming that 256-order QAM is performed on a control word, there are in total 16^{∗}256/8=512 pieces of I/Q data that is of the control word and in one microwave air interface frame, and the sum of the quantity of pieces of radio signal information and the quantity of pieces of I/Q data of the control word is a length of a payload area of the microwave air interface frame, that is, the length of the payload area of the microwave air interface frame is: 2048+512=2560 symbols. Assuming that a quantity x of pilots in each pilot location is 1, and a pilot interval is 32, a total quantity of pilots is 2560/32=80. Assuming that a quantity m of preambles is 36, a length of a microwave air interface frame is 36+80+2560=2676 symbols, and a symbol rate of the microwave air interface frame is 2676/(256/3.84 M)=40.14 Mbaud/s. Assuming that a roll-off factor of a transmit filter is 0.2, a required microwave signal bandwidth is 40.14 M^{∗}1.2=48.144 MHz.

If compression is performed on a sampling rate of antenna-carrier I/Q data, and a compression ratio is 5/8, there are in total 2048^{∗}5/8=1280 pieces of I/Q data in one microwave air interface frame; if compression is performed on a bit rate of a control word, a compression ratio is 3/8, and assuming that 256-order QAM is performed on the control word, there are 512^{∗}3/8=192 pieces of I/Q data that is of the control word and in one microwave air interface frame, and a length of a payload area of the microwave air interface frame is 1280+192=1472 symbols. Assuming that a quantity x of pilots in each pilot location is 1, and a pilot interval is 32, a quantity of pilots is 1472/32=46. Assuming that a quantity m of preambles is 36, a length of a microwave air interface frame is 36+46+1472=1554 symbols, and a symbol rate of the microwave air interface frame is 1544/(256/3.84 M)=23.31 Mbaud/s. Assuming that a roll-off factor of a transmit filter is 0.2, a required microwave signal bandwidth is 23.31 M^{∗}1.2=27.972 MHz.

It should be noted that, when the digital fronthaul data transmission method provided in the present invention is applied to an implementation manner in which "the second microwave device receives digital fronthaul data from an RRU, converts the received digital fronthaul data into a microwave radio frequency signal, and then sends the microwave radio frequency signal to the first microwave device by using a microwave air interface; the first microwave device receives the microwave radio frequency signal from the microwave air interface, restores the digital fronthaul data according to the received microwave radio frequency signal, and then sends the digital fronthaul data to a BBU", for a specific implementation process of the implementation manner, reference may be made to the specific descriptions of corresponding content in the embodiments corresponding to FIG. 2 (which is corresponding to an implementation process in which "the second microwave device receives digital fronthaul data from an RRU, converts the received digital fronthaul data into a microwave radio frequency signal, and then sends the microwave radio frequency signal to the first microwave device by using a microwave air interface") and FIG. 4 (which is corresponding to an implementation process in which "the first microwave device receives the microwave radio frequency signal from the microwave air interface, restores the digital fronthaul data according to the received microwave radio frequency signal, and then sends the digital fronthaul data to a BBU") in the embodiments of the present invention.

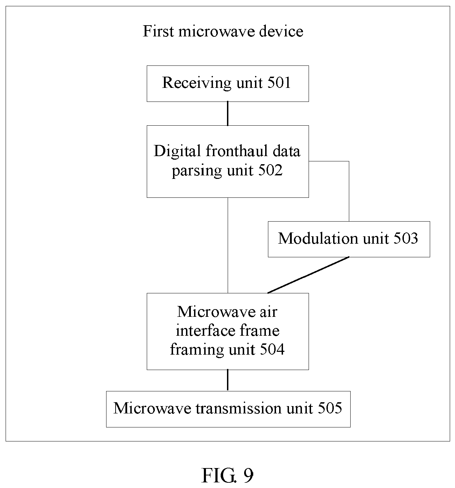

Another embodiment of the present invention provides a first microwave device, as shown in FIG. 9, the first microwave device may include: a receiving unit 501, a digital fronthaul data parsing unit 502, a modulation unit 503, a microwave air interface frame generating unit 504, and a microwave transmission unit 505.

The receiving unit 501 is configured to receive digital fronthaul data.

The digital fronthaul data parsing unit 502 is configured to obtain common information and radio signal information from the digital fronthaul data received by the receiving unit 501.

The modulation unit 503 is configured to perform digital quadrature amplitude modulation QAM on the common information obtained by the digital fronthaul data parsing unit 502, to obtain in-phase/quadrature I/Q data of the common information.

The microwave air interface frame generating unit 504 is configured to generate a microwave air interface frame in a time division multiplexing manner based on the radio signal information obtained by the digital fronthaul data parsing unit 502 and the I/Q data of the common information that is obtained by the modulation unit 503, where the radio signal information and the I/Q data of the common information are encapsulated in a payload area of the microwave air interface frame, and a pilot in a microwave overhead and the payload area are arranged at a preset interval in an interleaved manner.

The microwave transmission unit 505 is configured to send the microwave air interface frame obtained by the microwave air interface frame generating unit 504.

In this embodiment of the present invention, further, the microwave air interface frame generating unit 504 is specifically configured to: generate a transmit clock of the microwave air interface frame and a header indication signal of the microwave air interface frame; insert a preamble in the microwave overhead into a header location of the microwave air interface frame under the control of the transmit clock of the microwave air interface frame and the header indication signal of the microwave air interface frame; and encapsulate the radio signal information and the I/Q data of the common information into the payload area of the microwave air interface frame, and arrange the pilot and the payload area at the preset interval in an interleaved manner, according to a uniform interpolation algorithm under the control of the transmit clock of the microwave air interface frame and the header indication signal of the microwave air interface frame.

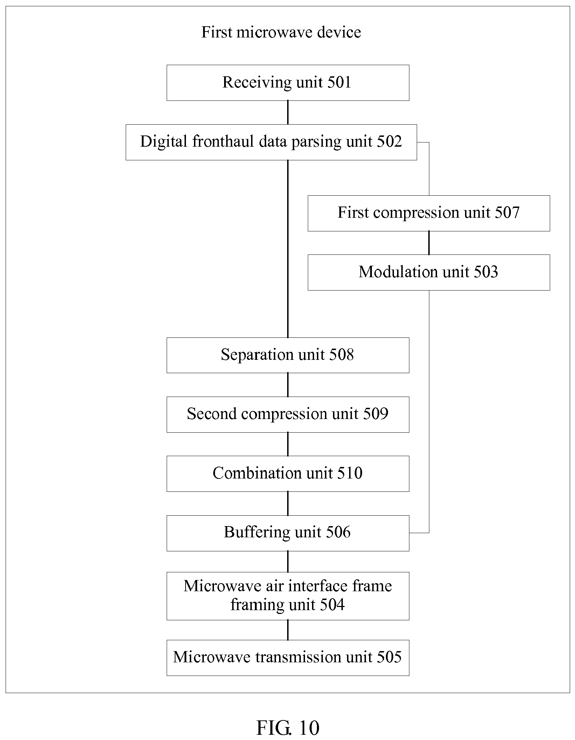

In this embodiment of the present invention, further, as shown in FIG. 10, the first microwave device may further include a buffering unit 506.

The buffering unit 506 is configured to: buffer the radio signal information and buffer the I/Q data of the common information, before the microwave air interface frame generating unit 504 encapsulates the radio signal information and the I/Q data of the common information into the payload area of the microwave air interface frame, and arranges the pilot and the payload area at the preset interval in an interleaved manner, according to the uniform interpolation algorithm under the control of the transmit clock of the microwave air interface frame and the header indication signal of the microwave air interface frame.

The microwave air interface frame generating unit 504 is specifically configured to: read the radio signal information and the I/Q data of the common information that are buffered by the buffering unit 506, encapsulate the radio signal information and the I/Q data of the common information into the payload area of the microwave air interface frame, and arrange the pilot and the payload area at the preset interval in an interleaved manner, under the control of the transmit clock of the microwave air interface frame and the header indication signal of the microwave air interface frame.

In this embodiment of the present invention, further, the microwave air interface frame generating unit 504 is specifically configured to: restore a digital fronthaul data clock from the digital fronthaul data, and track the digital fronthaul data clock to obtain the transmit clock of the microwave air interface frame; perform frame synchronization processing on the digital fronthaul data under the control of the digital fronthaul data clock to generate a header indication signal of the digital fronthaul data; delay the header indication signal of the digital fronthaul data under the control of the digital fronthaul data clock, so that the delayed header indication signal of the digital fronthaul data is aligned with the I/Q data of the common information; and perform N times frequency division processing on the delayed header indication signal of the digital fronthaul data under the control of the transmit clock of the microwave air interface frame to obtain the header indication signal of the microwave air interface frame, where N is a positive integer.

In this embodiment of the present invention, further, the microwave air interface frame generating unit 504 is specifically configured to: generate a first location indication signal according to a preset length of the payload area of the microwave air interface frame and a preset length of the pilot by using the uniform interpolation algorithm, where the first location indication signal is used to indicate a location of the pilot in the microwave air interface frame; generate, at a location in the microwave air interface frame except the location indicated by the first location indication signal, a second location indication signal according to the preset length of the payload area of the microwave air interface frame, the preset length of the pilot, and a preset length of the radio signal information by using the uniform interpolation algorithm, where the second location indication signal is used to indicate a location of the radio signal information in the payload area of the microwave air interface frame; generate, at a location in the microwave air interface frame except the location indicated by the first location indication signal and the location indicated by the second location indication signal, a third location indication signal according to the preset length of the payload area of the microwave air interface frame, the preset length of the pilot, the preset length of the radio signal information, and a preset length of the I/Q data of the common information by using the uniform interpolation algorithm, where the third location indication signal is used to indicate a location of the I/Q data of the common information into the payload area of the microwave air interface frame; and insert the radio signal information and the I/Q data of the common information into the payload area of the microwave air interface frame, and arrange the pilot and the payload area in an interleaved manner, under the control of the first location indication signal, the second location indication signal, and the third location indication signal.

In this embodiment of the present invention, further, the microwave air interface frame generating unit 504 is specifically configured to: generate the transmit clock of the microwave air interface frame by using a local oscillator; and generate the header indication signal of the microwave air interface frame according to a preset length of the microwave air interface frame under the control of the transmit clock of the microwave air interface frame.

In this embodiment of the present invention, further, the microwave air interface frame generating unit 504 is specifically configured to: generate a first location indication signal according to a preset length of the payload area of the microwave air interface frame and a preset length of the pilot by using the uniform interpolation algorithm, where the first location indication signal is used to indicate a location of the pilot in the microwave air interface frame; calculate, a length of the radio signal information, and generate, at a location in the microwave air interface frame except the location indicated by the first location indication signal, a second location indication signal by using the uniform interpolation algorithm, according to the preset length of the payload area of the microwave air interface frame, the preset length of the pilot, and a variation of a data length of the buffered radio signal information, where the length of the radio signal information is used to indicate a length of the radio signal information in the payload area of the microwave air interface frame, and the second location indication signal is used to indicate a location of the radio signal information in the payload area of the microwave air interface frame; calculate a length of the I/Q data of the common information, and generate, at a location in the microwave air interface frame except the location indicated by the first location indication signal and the location indicated by the second location indication signal, a third location indication signal by using the uniform interpolation algorithm, according to the preset length of the payload area of the microwave air interface frame, the preset length of the pilot, the length of the radio signal information obtained by means of calculation, and a variation of a data length of the buffered I/Q data of the common information, where the length of the I/Q data of the common information is used to indicate a length of the I/Q data of the common information into the payload area of the microwave air interface frame, and the third location indication signal is used to indicate a location of the I/Q data of the common information into the payload area of the microwave air interface frame; and insert the radio signal information and the I/Q data of the common information into the payload area of the microwave air interface frame, and arrange the pilot and the payload area in an interleaved manner, under the control of the first location indication signal, the second location indication signal, and the third location indication signal.

In this embodiment of the present invention, further, the microwave overhead may further include the length of the radio signal information and the length of the I/Q data of the common information.

In this embodiment of the present invention, further, the microwave air interface frame generating unit 504 is further specifically configured to: insert the length that is of the radio signal information and in the microwave overhead into a location after the preamble and before the payload area of the microwave air interface frame under the control of the transmit clock of the microwave air interface frame and the header indication signal of the microwave air interface frame; and insert the length that is of the I/Q data of the common information and in the microwave overhead into a location after the preamble and before the payload area of the microwave air interface frame under the control of the transmit clock of the microwave air interface frame and the header indication signal of the microwave air interface frame.

In this embodiment of the present invention, further, the first microwave device may further include a first compression unit 507.

The first compression unit 507 is configured to perform compression processing on the common information before the modulation unit 503 performs digital quadrature amplitude modulation QAM on the common information to obtain the in-phase/quadrature I/Q data of the common information.

The modulation unit 503 is specifically configured to perform digital QAM on the common information compressed by the first compression unit 507, to obtain the I/Q data of the common information.

In this embodiment of the present invention, further, the first microwave device may further include: a separation unit 508, a second compression unit 509, and a combination unit 510.

The separation unit 508 is configured to obtain at least one piece of antenna-carrier I/Q data from the radio signal information before the microwave air interface frame generating unit 504 generates the microwave air interface frame in a time division multiplexing manner based on the radio signal information and the I/Q data of the common information.

The second compression unit 509 is configured to perform compression processing on each piece of antenna-carrier I/Q data obtained by the separation unit 508.

The combination unit 510 is configured to combine the antenna-carrier I/Q data compressed by the second compression unit 509, to generate new compressed radio signal information.

The microwave air interface frame generating unit 504 is specifically configured to generate the microwave air interface frame in a time division multiplexing manner based on the compressed radio signal information and the I/Q data of the common information.

In this embodiment of the present invention, further, the microwave overhead may further include a compression parameter used when compression processing is being performed on the common information.

The microwave air interface frame generating unit 504 is further specifically configured to insert, into a location after the preamble and before the payload area of the microwave air interface frame under the control of the transmit clock of the microwave air interface frame and the header indication signal of the microwave air interface frame, the compression parameter, in the microwave overhead, used when compression processing is being performed on the common information.

In this embodiment of the present invention, further, the microwave overhead may further include a compression parameter used when compression processing is being performed on each piece of antenna-carrier I/Q data.

The microwave air interface frame generating unit 504 is further specifically configured to insert, into a location after the preamble and before the payload area of the microwave air interface frame under the control of the transmit clock of the microwave air interface frame and the header indication signal of the microwave air interface frame, the compression parameter, in the microwave overhead, used when compression processing is being performed on each piece of antenna-carrier I/Q data.

It should be noted that, for a detailed working process of each function module in the first microwave device provided in this embodiment of the present invention, reference may be made to detailed descriptions of a corresponding process in the method embodiment, and details are not described in this embodiment of the present invention.

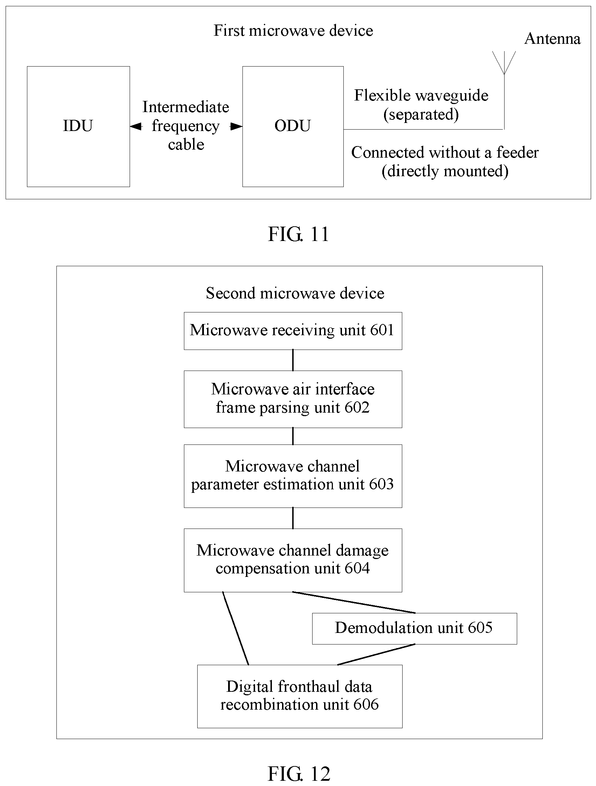

It should be noted that, as shown in FIG. 11, the first microwave device may specifically include three hardware modules: an indoor unit (IDU), an outdoor unit (ODU), and an antenna. The IDU may be configured to perform modulation processing on a baseband signal to obtain an intermediate frequency signal, the ODU may be configured to perform processing such as up-conversion or filtering on the intermediate frequency signal to obtain a radio frequency signal (certainly, performing modulation processing on the baseband signal to obtain the intermediate frequency signal and performing processing such as up-conversion or filtering on the intermediate frequency signal to obtain the radio frequency signal may also be implemented by using one hardware module). Functions of the receiving unit 501, the digital fronthaul data parsing unit 502, the modulation unit 503, the microwave air interface frame generating unit 504, the microwave transmission unit 505, the buffering unit 506, the first compression unit 507, the separation unit 508, the second compression unit 509, and the combination unit 510 that are in this embodiment of the present invention may be implemented by using one or more of the foregoing hardware modules.

The first microwave device provided in this embodiment of the present invention generates a microwave air interface frame in a time division multiplexing manner based on radio signal information and I/Q data of common information, and arranges a pilot in a microwave overhead and a payload area at a preset interval in an interleaved manner, so that the radio signal information, the I/Q data of the common information, and the microwave overhead can be transmitted over one microwave channel, and when quality of the transmitted radio signal information is reduced because of damage to the microwave channel caused by multipath, phase noise, frequency offset, I/Q imbalance, or the like, a second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

Another embodiment, which is not part of the present invention, provides a second microwave device, as shown in FIG. 12, the second microwave device may include: a microwave receiving unit 601, a microwave air interface frame parsing unit 602, a microwave channel parameter estimation unit 603, a microwave channel damage compensation unit 604, a demodulation unit 605, and a digital fronthaul data recombination unit 606.

The microwave receiving unit 601 is configured to receive a microwave air interface frame from a microwave air interface.

The microwave air interface frame parsing unit 602 is configured to obtain a microwave overhead, radio signal information, and in-phase/quadrature I/Q data of common information that are in the microwave air interface frame received by the microwave receiving unit 601, where the radio signal information and the I/Q data of the common information are encapsulated in a payload area of the microwave air interface frame, and a pilot in the microwave overhead and the payload area are arranged at a preset interval in an interleaved manner.

The microwave channel parameter estimation unit 603 is configured to perform channel damage estimation according to the pilot obtained by the microwave air interface frame parsing unit 602.

The microwave channel damage compensation unit 604 is configured to perform channel damage compensation for the radio signal information and the I/Q data of the common information that are obtained by the microwave air interface frame parsing unit 602.

The demodulation unit 605 is configured to perform digital demodulation on the I/Q data of the common information that is obtained after the microwave channel damage compensation unit 604 performs channel damage compensation, to generate the common information.

The digital fronthaul data recombination unit 606 is configured to: recombine the common information obtained by the demodulation unit 605 and the radio signal information that is obtained after the microwave channel damage compensation unit 604 performs channel damage compensation, to generate digital fronthaul data, and send the digital fronthaul data.

In this embodiment, further, the microwave air interface frame parsing unit 602 is specifically configured to: perform frame synchronization processing on the microwave air interface frame according to a preamble in the microwave overhead to generate a header indication signal of the microwave air interface frame; and extract the pilot, the radio signal information, and the I/Q data of the common information according to a uniform interpolation algorithm under the control of the header indication signal of the microwave air interface frame.

In this embodiment, further, the microwave air interface frame parsing unit 602 is specifically configured to: generate a first location indication signal according to a preset length of the payload of the microwave air interface frame and a preset length of the pilot by using the uniform interpolation algorithm, where the first location indication signal is used to indicate a location of the pilot in the microwave air interface frame; generate a second location indication signal according to the preset length of the payload of the microwave air interface frame, the preset length of the pilot, and a preset length of the radio signal information by using the uniform interpolation algorithm, where the second location indication signal is used to indicate a location of the radio signal information in the payload area of the microwave air interface; generate a third location indication signal according to the preset length of the payload of the microwave air interface frame, the preset length of the pilot, the preset length of the radio signal information, and a preset length of the I/Q data of the common information by using the uniform interpolation algorithm, where the third location indication signal is used to indicate a location of the I/Q data of the common information into the payload area of the microwave air interface; and extract the pilot, the radio signal information, and the I/Q data of the common information from the microwave air interface frame under the control of the first location indication signal, the second location indication signal, and the third location indication signal.

In this embodiment, further, the microwave overhead obtained by the microwave air interface frame parsing unit 602 may further include a length of the radio signal information and a length of the I/Q data of the common information.

The length of the radio signal information is used to indicate a length of the radio signal information in the payload area of the microwave air interface frame, and is located after the preamble and before the payload area of the microwave air interface frame.

The length of the I/Q data of the common information is used to indicate a length of the I/Q data of the common information into the payload area of the microwave air interface frame, and is located after the preamble and before the payload area of the microwave air interface frame.

In this embodiment, further, the microwave air interface frame parsing unit 602 is specifically configured to: generate a first location indication signal according to a preset length of the payload of the microwave air interface frame and a preset length of the pilot by using the uniform interpolation algorithm, where the first location indication signal is used to indicate a location of the pilot in the microwave air interface frame; generate, by using the uniform interpolation algorithm, a second location indication signal according to the preset length of the payload of the microwave air interface frame, the preset length of the pilot, and the length that is of the radio signal information and that is extracted from the microwave overhead, where the second location indication signal is used to indicate a location of the radio signal information in the payload area of the microwave air interface; generate, by using the uniform interpolation algorithm, a third location indication signal according to the preset length of the payload of the microwave air interface frame, the preset length of the pilot, the length that is of the radio signal information and that is extracted from the microwave overhead, and the length that is of the I/Q data of the common information and that is extracted from the microwave overhead, where the third location indication signal is used to indicate a location of the I/Q data of the common information into the payload area of the microwave air interface; and extract the pilot, the radio signal information, and the I/Q data of the common information from the microwave air interface frame under the control of the first location indication signal, the second location indication signal, and the third location indication signal.

In this embodiment, further, the microwave channel parameter estimation unit 603 is further configured to perform channel damage estimation according to the I/Q data of the common information.

The microwave channel parameter estimation unit 603 may obtain a microwave channel parameter after performing channel damage estimation according to the pilot or according to the pilot and the I/Q data of the common information, where the microwave channel parameter includes at least one of the following: multipath, phase noise, frequency offset, or I/Q imbalance.

In this embodiment, further, the microwave channel damage compensation unit 604 may perform, according to a preset compensation algorithm, channel damage compensation for the radio signal information and the I/Q data of the common information that are obtained by the microwave air interface frame parsing unit 602. The preset compensation algorithm includes at least one of the following: a multipath balancing algorithm, a phase noise compensation algorithm, a frequency offset compensation algorithm, or an I/Q imbalance compensation algorithm.

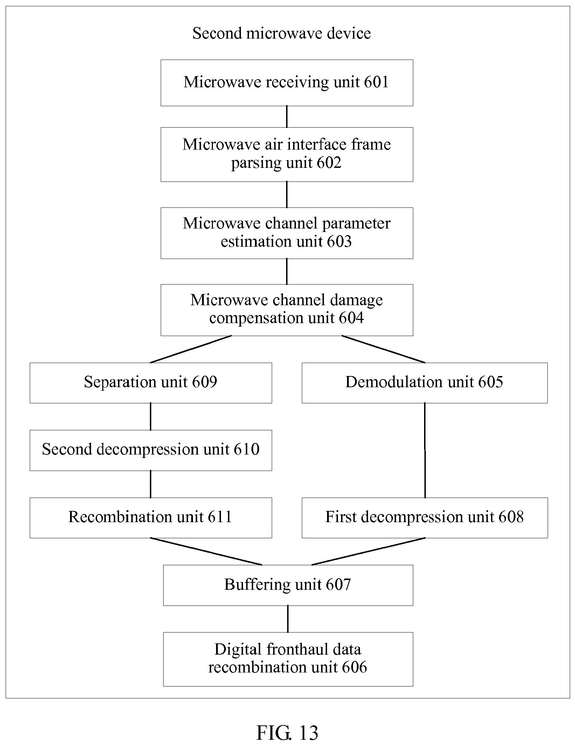

In this embodiment, further, as shown in FIG. 13, the second microwave device may further include a buffering unit 607.

The buffering unit 607 is configured to: before the digital fronthaul data recombination unit 606 recombines the common information and the radio signal information that is obtained after channel damage compensation, to generate the digital fronthaul data, buffer the common information, and buffer the radio signal information obtained after channel damage compensation.

The digital fronthaul data recombination unit 606 is specifically configured to: generate a transmit clock of the digital fronthaul data and a header indication signal of the digital fronthaul data; and read, under the control of the transmit clock of the digital fronthaul data and the header indication signal of the digital fronthaul data, the common information and the radio signal information obtained after channel damage compensation that are buffered by the buffering unit 607, to generate the digital fronthaul data.

In this embodiment, further, the digital fronthaul data recombination unit 606 is specifically configured to: restore a microwave air interface frame clock from the microwave air interface frame, and track the microwave air interface frame clock to obtain the transmit clock of the digital fronthaul data; perform frame synchronization processing on the microwave air interface frame under the control of the microwave air interface frame clock to generate the header indication signal of the microwave air interface frame; delay the header indication signal of the microwave air interface frame under the control of the microwave air interface frame clock, so that the delayed header indication signal of the microwave air interface frame is aligned with the common information obtained after digital demodulation; and perform N times frequency multiplication on the delayed header indication signal of the microwave air interface frame under the control of the transmit clock of the digital fronthaul data, to generate the header indication signal of the digital fronthaul data, where N is a positive integer.

In this embodiment, further, the digital fronthaul data recombination unit 606 is specifically configured to: control, according to a variation of a data legth of the buffered radio signal information obtained after channel damage compensation or a variation of a data length of the buffered common information, a local clock generator to generate the transmit clock of the digital fronthaul data; and generate the header indication signal of the digital fronthaul data under the control of the transmit clock of the digital fronthaul data.

In this embodiment, further, the digital fronthaul data recombination unit 606 is specifically configured to: perform synchronization on the common information read from a cache; and recombine, under the control of the transmit clock of the digital fronthaul data and the header indication signal of the digital fronthaul data, the synchronized common information and the radio signal information that is obtained after channel damage compensation, to generate the digital fronthaul data.

In this embodiment, further, the second microwave device may further include a first decompression unit 608.

The first decompression unit 608 is configured to perform decompression processing on the common information before the digital fronthaul data recombination unit 606 recombines the common information and the radio signal information that is obtained after channel damage compensation, to generate digital fronthaul data.

The digital fronthaul data recombination unit 606 is specifically configured to: recombine the common information decompressed by the first decompression unit 608 and the radio signal information that is obtained after channel damage compensation, to generate the digital fronthaul data.

In this embodiment, further, the second microwave device may further include: a separation unit 609, a second decompression unit 610, and a recombination unit 611.

The separation unit 609 is configured to: before the digital fronthaul data recombination unit 606 recombines the common information and the radio signal information that is obtained after channel damage compensation, to generate the digital fronthaul data, obtain at least one piece of antenna-carrier I/Q data from the radio signal information obtained after channel damage compensation.

The second decompression unit 610 is configured to perform decompression processing on each piece of antenna-carrier I/Q data obtained by the separation unit 609.

The recombination unit 611 is configured to generate decompressed radio signal information based on the antenna-carrier I/Q data decompressed by the second decompression unit 610.

The digital fronthaul data recombination unit 606 is specifically configured to recombine the common information and the decompressed radio signal information obtained by the recombination unit 611, to generate the digital fronthaul data.

In this embodiment, further, the microwave overhead obtained by the microwave air interface frame parsing unit 602 further includes a compression parameter used when compression processing is being performed on the common information, where the compression parameter used when compression processing is being performed on the common information is located after the preamble and before the payload area of the microwave air interface frame.

The first decompression unit 608 is specifically configured to: extract the compression parameter, in the microwave overhead, used when compression processing is being performed on the common information, and perform decompression processing on the common information according to the compression parameter used when compression processing is being performed on the common information.

In this embodiment, further, the microwave overhead obtained by the microwave air interface frame parsing unit 602 further includes a compression parameter used when compression processing is being performed on each piece of antenna-carrier I/Q data, where the compression parameter used when compression processing is being performed on each piece of antenna-carrier I/Q data is located after the preamble and before the payload area of the microwave air interface frame.

The second decompression unit 610 is specifically configured to: extract the compression parameter, in the microwave overhead, used when compression processing is being performed on each piece of antenna-carrier I/Q data, and perform decompression processing on each piece of antenna-carrier I/Q data according to the compression parameter used when compression processing is being performed on each piece of antenna-carrier I/Q data.

It should be noted that, for a detailed working process of each function module in the second microwave device provided in this embodiment, reference may be made to detailed descriptions of a corresponding process in the method embodiment, and details are not described in this embodiment.

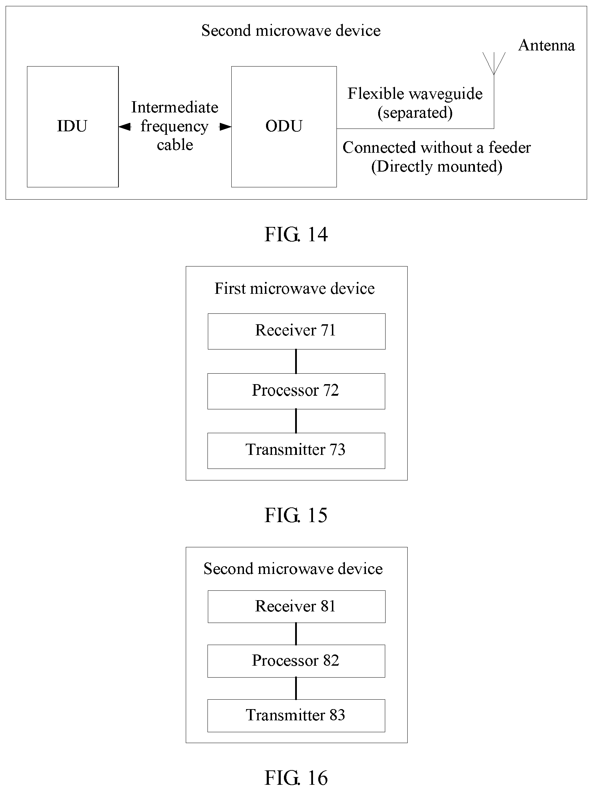

It should be noted that, as shown in FIG. 14, the second microwave device may specifically include three hardware modules: an IDU, an ODU, and an antenna. The ODU may be configured to perform processing such as down-conversion or filtering on a radio frequency signal to obtain an intermediate frequency signal, the IDU may be configured to perform demodulation processing on the intermediate frequency signal to obtain a baseband signal (certainly, performing processing such as down-conversion or filtering on the radio frequency signal to obtain the intermediate frequency signal and performing demodulation processing on the intermediate frequency signal to obtain the baseband signal may also be implemented by using one hardware module). Functions of the microwave receiving unit 601, the microwave air interface frame parsing unit 602, the microwave channel parameter estimation unit 603, the microwave channel damage compensation unit 604, the demodulation unit 605, the digital fronthaul data recombination unit 606, the buffering unit 607, the first decompression unit 608, the separation unit 609, the second decompression unit 610, and the recombination unit 611 that are in this embodiment may be implemented by using one or more of the foregoing hardware modules.

According to the second microwave device provided in this embodiment, a first microwave device generates a microwave air interface frame in a time division multiplexing manner based on radio signal information and I/Q data of common information, and arranges a pilot in a microwave overhead and a payload area at a preset interval in an interleaved manner, that is, the radio signal information, the I/Q data of the common information, and the microwave overhead are transmitted over one microwave channel; therefore, when quality of the transmitted radio signal information is reduced because of damage to the microwave channel caused by multipath, phase noise, frequency offset, I/Q imbalance, or the like, the second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

Another embodiment of the present invention provides a first microwave device. As shown in FIG. 15, the first microwave device may include a receiver 71, a processor 72, and a transmitter 73.

The receiver 71 is configured to receive digital fronthaul data.

The processor 72 is configured to: obtain common information and radio signal information from the digital fronthaul data received by the receiver 71, perform digital quadrature amplitude modulation QAM on the common information to obtain in-phase/quadrature I/Q data of the common information, and generate a microwave air interface frame in a time division multiplexing manner based on the radio signal information and the I/Q data of the common information, where the radio signal information and the I/Q data of the common information are encapsulated in a payload area of the microwave air interface frame, and a pilot in a microwave overhead and the payload area are arranged at a preset interval in an interleaved manner.

The transmitter 73 is configured to send the microwave air interface frame obtained by the processor 72.

In this embodiment of the present invention, further, the processor 72 is specifically configured to: generate a transmit clock of the microwave air interface frame and a header indication signal of the microwave air interface frame; insert a preamble in the microwave overhead into a header location of the microwave air interface frame under the control of the transmit clock of the microwave air interface frame and the header indication signal of the microwave air interface frame; and encapsulate the radio signal information and the I/Q data of the common information into the payload area of the microwave air interface frame, and arrange the pilot and the payload area at the preset interval in an interleaved manner, according to a uniform interpolation algorithm under the control of the transmit clock of the microwave air interface frame and the header indication signal of the microwave air interface frame.

It should be noted that, for a detailed working process of each function module in the first microwave device provided in this embodiment of the present invention, reference may be made to detailed descriptions of a corresponding process in the method embodiment, and details are not described in this embodiment of the present invention.

It should be noted that, as shown in FIG. 11, the first microwave device may specifically include three hardware modules: an IDU, an ODU, and an antenna. The IDU may be configured to perform modulation processing on a baseband signal to obtain an intermediate frequency signal, the ODU may be configured to perform processing such as up-conversion or filtering on the intermediate frequency signal to obtain a radio frequency signal (certainly, performing modulation processing on the baseband signal to obtain the intermediate frequency signal and performing processing such as up-conversion or filtering on the intermediate frequency signal to obtain the radio frequency signal may also be implemented by using one hardware module). Functions of the receiver 71, the processor 72, and the transmitter 73 that are in this embodiment of the present invention may be implemented by using one or more of the foregoing hardware modules.

The first microwave device provided in this embodiment of the present invention generates a microwave air interface frame in a time division multiplexing manner based on radio signal information and I/Q data of common information, and arranges a pilot in a microwave overhead and a payload area at a preset interval in an interleaved manner, so that the radio signal information, the I/Q data of the common information, and the microwave overhead can be transmitted over one microwave channel, and when quality of the transmitted radio signal information is reduced because of damage to the microwave channel caused by multipath, phase noise, frequency offset, I/Q imbalance, or the like, a second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

Another embodiment, which is not part of the present invention, provides a second microwave device. As shown in FIG. 16, the second microwave device may include a receiver 81, a processor 82, and a transmitter 83.

The receiver 81 is configured to receive a microwave air interface frame from a microwave air interface.

The processor 82 is configured to: obtain a microwave overhead, radio signal information, and in-phase/quadrature I/Q data of common information that are in the microwave air interface frame, where the radio signal information and the I/Q data of the common information are encapsulated in a payload area of the microwave air interface frame, and a pilot in the microwave overhead and the payload area are arranged at a preset interval in an interleaved manner; perform channel damage estimation according to the pilot; perform channel damage compensation for the radio signal information and the I/Q data of the common information; perform digital demodulation on the I/Q data of the common information that is obtained after channel damage compensation, to generate the common information; and recombine the common information and the radio signal information that is obtained after channel damage compensation, to generate digital fronthaul data.

The transmitter 83 is configured to send the digital fronthaul data obtained by the processor 82.

In this embodiment, further, the processor 82 is specifically configured to: perform frame synchronization processing on the microwave air interface frame according to a preamble in the microwave overhead to generate a header indication signal of the microwave air interface frame; and extract the pilot, the radio signal information, and the I/Q data of the common information according to a uniform interpolation algorithm under the control of the header indication signal of the microwave air interface frame.

In this embodiment, further, the processor 82 is further configured to perform channel damage estimation according to the I/Q data of the common information.

It should be noted that, for a detailed working process of each function module in the second microwave device provided in this embodiment, reference may be made to detailed descriptions of a corresponding process in the method embodiment, and details are not described in this embodiment of the present invention.

It should be noted that, as shown in FIG. 14, the second microwave device may specifically include three hardware modules: an IDU, an ODU, and an antenna. The ODU may be configured to perform processing such as down-conversion or filtering on a radio frequency signal to obtain an intermediate frequency signal, the IDU may be configured to perform demodulation processing on the intermediate frequency signal to obtain a baseband signal (certainly, performing processing such as down-conversion or filtering on the radio frequency signal to obtain the intermediate frequency signal and performing demodulation processing on the intermediate frequency signal to obtain the baseband signal may also be implemented by using one hardware module). Functions of the receiver 81, the processor 82, and the transmitter 83 that are in this embodiment of the present invention may be implemented by using one or more of the foregoing hardware modules.

According to the second microwave device provided in this embodiment, a first microwave device generates a microwave air interface frame in a time division multiplexing manner based on radio signal information and I/Q data of common information, and arranges a pilot in a microwave overhead and a payload area at a preset interval in an interleaved manner, that is, the radio signal information, the T/Q data of the common information, and the microwave overhead are transmitted over one microwave channel; therefore, when quality of the transmitted radio signal information is reduced because of damage to the microwave channel caused by multipath, phase noise, frequency offset, I/Q imbalance, or the like, the second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

Another embodiment of the present invention provides a digital fronthaul data transmission system, including a first microwave device and a second microwave device.

The first microwave device is configured to: receive digital fronthaul data; obtain common information and radio signal information from the digital fronthaul data; perform digital quadrature amplitude modulation QAM on the common information to obtain in-phase/quadrature I/Q data of the common information; generate a microwave air interface frame in a time division multiplexing manner based on the radio signal information and the I/Q data of the common information, where the radio signal information and the I/Q data of the common information are encapsulated in a payload area of the microwave air interface frame, and a pilot in a microwave overhead and the payload area are arranged at a preset interval in an interleaved manner; and send the microwave air interface frame.

The second microwave device is configured to: receive the microwave air interface frame from a microwave air interface; obtain the microwave overhead, the radio signal information, and the in-phase/quadrature I/Q data of the common information that are in the microwave air interface frame; perform channel damage estimation according to the pilot; perform channel damage compensation for the radio signal information and the I/Q data of the common information; perform digital demodulation on the I/Q data of the common information that is obtained after channel damage compensation, to generate the common information; and recombine the common information and the radio signal information that is obtained after channel damage compensation, to generate the digital fronthaul data, and send the digital fronthaul data.

According to the digital fronthaul data transmission system provided in this embodiment of the present invention, a microwave air interface frame is generated in a time division multiplexing manner based on radio signal information and I/Q data of common information, and a pilot in a microwave overhead and a payload area are arranged at a preset interval in an interleaved manner, so that the radio signal information, the I/Q data of the common information, and the microwave overhead can be transmitted over one microwave channel, and when quality of the transmitted radio signal information is reduced because of damage to the microwave channel caused by multipath, phase noise, frequency offset, I/Q imbalance, or the like, a second microwave device can compensate, by using a channel parameter such as multipath, phase noise, frequency offset, or I/Q imbalance determined according to the pilot included in the microwave overhead, for the damage to the microwave channel on which the radio signal information is transmitted, thereby improving system performance of a distributed base station. In addition, the radio signal information and the I/Q data of the common information are transmitted in a time division multiplexing manner over one microwave channel, so that an entire microwave system is a single-carrier system; therefore, hardware complexity is reduced and costs are reduced.

The foregoing descriptions about implementation manners allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above.

In the several embodiments provided in the present application, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementation manners of the present invention, but are not intended to limit the protection scope of the present invention. Therefore, the protection scope of the present invention shall be subject to the protection scope of the claims.

## Claims

1. A digital fronthaul data transmission method, comprising:
receiving (101), by a first microwave device, digital fronthaul data, and obtaining common information for implementing functions and radio signal information from the digital fronthaul data;
performing (102), by the first microwave device, digital quadrature amplitude modulation, QAM, on the common information to obtain in-phase/quadrature, I/Q data of the common information, wherein QAM modulation is not performed on the radio signal information;
generating (103), by the first microwave device, a microwave air interface frame in a time division multiplexing manner by time multiplexing antenna-carrier I/Q samples corresponding to the radio signal information and the I/Q data of the common information, wherein the radio signal information and the I/Q data of the common information are encapsulated in a payload area of the microwave air interface frame, and a pilot in a microwave overhead and the payload area are arranged at a preset interval in an interleaved manner; and
sending (104), by the first microwave device, the microwave air interface frame; wherein the generating, by the first microwave device, a microwave air interface frame in a time division multiplexing manner based on the radio signal information and the I/Q data of the common information specifically comprises:
generating, by the first microwave device, a transmit clock of the microwave air interface frame and a header indication signal of the microwave air interface frame;
inserting, by the first microwave device, a preamble in the microwave overhead into a header location of the microwave air interface frame under the control of the transmit clock of the microwave air interface frame and the header indication signal of the microwave air interface frame; and
encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame.

2. The method according to claim 1, wherein before the encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame, the method further comprises:
buffering, by the first microwave device, the radio signal information; and
buffering, by the first microwave device, the I/Q data of the common information; and
the encapsulating, by the first microwave device, the radio signal information and the I/Q data of the common information into the payload area of the microwave air interface frame, and arranging the pilot and the payload area at the preset interval in an interleaved manner, according to a uniform interpolation algorithm under the control of the transmit clock of the microwave air interface frame and the header indication signal of the microwave air interface frame specifically comprises:
reading, by the first microwave device, the buffered radio signal information and the buffered I/Q data of the common information, encapsulating the radio signal information and the I/Q data of the common information into the payload area of the microwave air interface frame, and arranging the pilot and the payload area at the preset interval in an interleaved manner, under the control of the transmit clock of the microwave air interface frame and the header indication signal of the microwave air interface frame.

3. The method according to claim 1 or 2, wherein the generating, by the first microwave device, a transmit clock of the microwave air interface frame and a header indication signal of the microwave air interface frame specifically comprises:
restoring, by the first microwave device, a digital fronthaul data clock from the digital fronthaul data, and tracking the digital fronthaul data clock to obtain the transmit clock of the microwave air interface frame;
performing, by the first microwave device, frame synchronization processing on the digital fronthaul data under the control of the digital fronthaul data clock to generate a header indication signal of the digital fronthaul data;
delaying, by the first microwave device, the header indication signal of the digital fronthaul data under the control of the digital fronthaul data clock, so that the delayed header indication signal of the digital fronthaul data is aligned with the I/Q data of the common information; and
performing, by the first microwave device, N times frequency division processing on the delayed header indication signal of the digital fronthaul data under the control of the transmit clock of the microwave air interface frame to obtain the header indication signal of the microwave air interface frame, wherein N is a positive integer;
or
generating, by the first microwave device, the transmit clock of the microwave air interface frame by using a local oscillator; and
generating, by the first microwave device, the header indication signal of the microwave air interface frame according to a preset length of the microwave air interface frame under the control of the transmit clock of the microwave air interface frame.

4. The method according to any one of claims 1 to 3, wherein before the performing, by the first microwave device, digital quadrature amplitude modulation, QAM on the common information to obtain in-phase/quadrature, I/Q data of the common information, the method further comprises:
performing, by the first microwave device, compression processing on the common information; and
the performing, by the first microwave device, digital quadrature amplitude modulation, QAM on the common information to obtain in-phase/quadrature, I/Q data of the common information specifically comprises:
performing, by the first microwave device, digital QAM on the compressed common information to obtain the I/Q data of the common information.

5. A first microwave device, comprising:
a receiving unit (501), configured to receive digital fronthaul data;
a digital fronthaul data parsing unit (502), configured to obtain common information for implementing functions and radio signal information from the digital fronthaul data received by the receiving unit;
a modulation unit (503), configured to perform digital quadrature amplitude modulation, QAM on the common information obtained by the digital fronthaul data parsing unit, to obtain in-phase/quadrature, I/Q data of the common information, wherein the modulation unit (503) is configured to perform no QAM modulation on the radio signal information;
a microwave air interface frame generating unit (504), configured to generate a microwave air interface frame in a time division multiplexing manner by time multiplexing antenna-carrier I/Q samples corresponding to the radio signal information obtained by the digital fronthaul data parsing unit (502) and the I/Q data of the common information that is obtained by the modulation unit (503), wherein the radio signal information and the I/Q data of the common information are encapsulated in a payload area of the microwave air interface frame, and a pilot in a microwave overhead and the payload area are arranged at a preset interval in an interleaved manner; and
a microwave transmission unit (505), configured to send the microwave air interface frame obtained by the microwave air interface frame generating unit (504), wherein the microwave air interface frame generating unit (504) is specifically configured to:
generate a transmit clock of the microwave air interface frame and a header indication signal of the microwave air interface frame;
insert a preamble in the microwave overhead into a header location of the microwave air interface frame under the control of the transmit clock of the microwave air interface frame and the header indication signal of the microwave air interface frame; and
encapsulate the radio signal information and the I/Q data of the common information into the payload area of the microwave air interface frame, and arrange the pilot and the payload area at the preset interval in an interleaved manner, according to a uniform interpolation algorithm under the control of the transmit clock of the microwave air interface frame and the header indication signal of the microwave air interface frame.

6. The first microwave device according to claim 5, further comprising:
a buffering unit (506), configured to: buffer the radio signal information and buffer the I/Q data of the common information, before the microwave air interface frame generating unit (504) encapsulates the radio signal information and the I/Q data of the common information into the payload area of the microwave air interface frame, and arranges the pilot and the payload area at the preset interval in an interleaved manner, according to the uniform interpolation algorithm under the control of the transmit clock of the microwave air interface frame and the header indication signal of the microwave air interface frame; wherein
the microwave air interface frame generating unit (504) is specifically configured to:
read the radio signal information and the I/Q data of the common information that are buffered by the buffering unit (506), encapsulate the radio signal information and the I/Q data of the common information into the payload area of the microwave air interface frame, and arrange the pilot and the payload area at the preset interval in an interleaved manner, under the control of the transmit clock of the microwave air interface frame and the header indication signal of the microwave air interface frame.

## Patentansprüche

1. Verfahren zum Übertragen von digitalen Fronthaul-Daten, umfassend:
Empfangen (101), in einer ersten Mikrowellenvorrichtung, von digitalen Fronthaul-Daten und Erhalten von allgemeinen Informationen zum Umsetzen von Funktionen und von Funksignalinformationen aus den digitalen Fronthaul-Daten;
Ausführen (102), durch die erste Mikrowellenvorrichtung, einer digitalen Quadratur-Amplitudenmodulation, QAM, an den allgemeinen Informationen, um In-Phase/Quadratur-Daten, I/Q-Daten der allgemeinen Informationen zu erhalten, wobei die QAM-Modulation nicht an den Funksignalinformationen ausgeführt wird;
Erzeugen (103), durch die erste Mikrowellenvorrichtung, eines Mikrowellenluftschnittstellenframes in einer Zeitmultiplexmethode, indem Antenne-Träger-I/Q-Abtastwerte, die den Funksignalinformationen und den I/Q-Daten der allgemeinen Informationen entsprechen, einem Zeitmultiplexen unterzogen werden, wobei die Funksignalinformationen und die I/Q-Daten der allgemeinen Informationen in einem Nutzdatenbereich des Mikrowellenluftschnittstellenframes eingekapselt werden, und wobei ein Pilotsignal in einem Mikrowellenoverhead und der Nutzdatenbereich in einem voreingestellten Intervall in einer verschachtelten Weise angeordnet sind; und
Senden (104), durch die erste Mikrowellenvorrichtung, des Mikrowellenluftschnittstellenframes; wobei das Erzeugen, durch die erste Mikrowellenvorrichtung, eines Mikrowellenluftschnittstellenframes in einer Zeitmultiplexmethode aufgrund der Funksignalinformationen und der I/Q-Daten der allgemeinen Informationen insbesondere umfasst:
Erzeugen, durch die erste Mikrowellenvorrichtung, eines Übertragungstakts des Mikrowellenluftschnittstellenframes und eines Kopfzeilenanzeigesignals des Mikrowellenluftschnittstellenframes;
Einfügen, durch die erste Mikrowellenvorrichtung, einer Präambel in dem Mikrowellenoverhead in einen Kopfzeilenort des Mikrowellenluftschnittstellenframes unter der Steuerung durch den Übertragungstakt des Mikrowellenluftschnittstellenframes und durch das Kopfzeilenanzeigesignal des Mikrowellenluftschnittstellenframes; und
Einkapseln, durch die erste Mikrowellenvorrichtung, der Funksignalinformationen und der I/Q-Daten der allgemeinen Informationen in dem Nutzdatenbereich des Mikrowellenluftschnittstellenframes, und Anordnen des Pilotsignals und des Nutzdatenbereichs in dem voreingestellten Intervall in einer verschachtelten Weise gemäß einem gleichmäßigen Interpolationsalgorithmus unter der Steuerung durch den Übertragungstakt des Mikrowellenluftschnittstellenframes und durch das Kopfzeilenanzeigesignal des Mikrowellenluftschnittstellenframes.

2. Verfahren nach Anspruch 1, wobei das Verfahren vor dem Einkapseln, durch die erste Mikrowellenvorrichtung, der Funksignalinformationen und der I/Q-Daten der allgemeinen Informationen in dem Nutzdatenbereich des Mikrowellenluftschnittstellenframes, und dem Anordnen des Pilotsignals und des Nutzdatenbereichs in dem voreingestellten Intervall in einer verschachtelten Weise gemäß einem gleichmäßigen Interpolationsalgorithmus unter der Steuerung durch den Übertragungstakt des Mikrowellenluftschnittstellenframes und durch das Kopfzeilenanzeigesignal des Mikrowellenluftschnittstellenframes außerdem umfasst:
Puffern, durch die erste Mikrowellenvorrichtung, der Funksignalinformationen, und Puffern, durch die erste Mikrowellenvorrichtung, der I/Q-Daten der allgemeinen Informationen; und
wobei das Einkapseln, durch die erste Mikrowellenvorrichtung, der Funksignalinformationen und der I/Q-Daten der allgemeinen Informationen in dem Nutzdatenbereich des Mikrowellenluftschnittstellenframes, und das Anordnen des Pilotsignals und des Nutzdatenbereichs in dem voreingestellten Intervall in einer verschachtelten Weise gemäß einem gleichmäßigen Interpolationsalgorithmus unter der Steuerung durch den Übertragungstakt des Mikrowellenluftschnittstellenframes und durch das Kopfzeilenanzeigesignal des Mikrowellenluftschnittstellenframes insbesondere umfasst:
Lesen, durch die erste Mikrowellenvorrichtung, der gepufferten Funksignalinformationen und der gepufferten I/Q-Daten der allgemeinen Informationen, Einkapseln der Funksignalinformationen und der I/Q-Daten der allgemeinen Informationen in dem Nutzdatenbereich des Mikrowellenluftschnittstellenframes, und Anordnen des Pilotsignals und des Nutzdatenbereichs in dem voreingestellten Intervall in einer verschachtelten Weise unter der Steuerung durch den Übertragungstakt des Mikrowellenluftschnittstellenframes und durch das Kopfzeilenanzeigesignal des Mikrowellenluftschnittstellenframes.

3. Verfahren nach Anspruch 1 oder 2, wobei das Erzeugen, durch die erste Mikrowellenvorrichtung, eines Übertragungstakts des Mikrowellenluftschnittstellenframes und eines Kopfzeilenanzeigesignals des Mikrowellenluftschnittstellenframes insbesondere umfasst:
Wiederherstellen, durch die erste Mikrowellenvorrichtung, eines digitalen Fronthaul-Datentakts aus den digitalen Fronthaul-Daten und Verfolgen des digitalen Fronthaul-Datentakts, um den Übertragungstakt des Mikrowellenluftschnittstellenframes zu erhalten;
Ausführen, durch die erste Mikrowellenvorrichtung, einer Framesynchronisationsbearbeitung an den digitalen Fronthaul-Daten unter der Steuerung durch den digitalen Fronthaul-Datentakt, um ein Kopfzeilenanzeigesignal der digitalen Fronthaul-Daten zu erzeugen;
Verzögern, durch die erste Mikrowellenvorrichtung, des Kopfzeilenanzeigesignals der digitalen Fronthaul-Daten unter der Steuerung durch den digitalen Fronthaul-Datentakt, sodass das verzögerte Kopfzeilenanzeigesignal der digitalen Fronthaul-Daten mit den I/Q-Daten der allgemeinen Informationen abgestimmt wird; und
Ausführen, durch die erste Mikrowellenvorrichtung, einer N-maligen Frequenzteilungsbearbeitung an dem verzögerten Kopfzeilenanzeigesignal der digitalen Fronthaul-Daten unter der Steuerung durch den Übertragungstakt des Mikrowellenluftschnittstellenframes, um das Kopfzeilenanzeigesignal des Mikrowellenluftschnittstellenframes zu erhalten, wobei N eine positive ganze Zahl ist;
oder
Erzeugen, durch die erste Mikrowellenvorrichtung, des Übertragungstakts des Mikrowellenluftschnittstellenframes, indem ein lokaler Oszillator verwendet wird; und
Erzeugen, durch die erste Mikrowellenvorrichtung, des Kopfzeilenanzeigesignals des Mikrowellenluftschnittstellenframes gemäß einer voreingestellten Länge des Mikrowellenluftschnittstellenframes unter der Steuerung durch den Übertragungstakt des Mikrowellenluftschnittstellenframes.

4. Verfahren nach einem der Ansprüche 1 bis 3, wobei das Verfahren vor dem Ausführen, durch die erste Mikrowellenvorrichtung, einer digitalen Quadratur-Amplitudenmodulation, QAM, an den allgemeinen Informationen, um In-Phase/Quadratur-Daten, I/Q-Daten der allgemeinen Informationen zu erhalten, außerdem umfasst:
Ausführen, durch die erste Mikrowellenvorrichtung, einer Komprimierungsbearbeitung an den allgemeinen Informationen; und
wobei das Ausführen, durch die erste Mikrowellenvorrichtung, einer digitalen Quadratur-Amplitudenmodulation, QAM, an den allgemeinen Informationen, um In-Phase/Quadratur-Daten, I/Q-Daten der allgemeinen Informationen zu erhalten, insbesondere umfasst:
Ausführen, durch die erste Mikrowellenvorrichtung, einer digitalen QAM an den komprimierten allgemeinen Informationen, um die I/Q-Daten der allgemeinen Informationen zu erhalten.

5. Erste Mikrowellenvorrichtung, umfassend:
eine Empfangseinheit (501), die konfiguriert ist zum Empfangen von digitalen Fronthaul-Daten;
eine Zerlegungseinheit für die digitalen Fronthaul-Daten (502), die konfiguriert ist zum Erhalten von allgemeinen Informationen zum Umsetzen von Funktionen und von Funksignalinformationen aus den digitalen Fronthaul-Daten, die in der Empfangseinheit empfangen werden;
eine Modulationseinheit (503), die konfiguriert ist zum Ausführen einer digitalen Quadratur-Amplitudenmodulation, QAM, an den allgemeinen Informationen, die durch die Zerlegungseinheit für die digitalen Fronthaul-Daten erhalten werden, um In-Phase/Quadratur-I/Q-Daten der allgemeinen Informationen zu erhalten, wobei die Modulationseinheit (503) konfiguriert ist zum Nichtausführen einer QAM-Modulation an den Funksignalinformationen;
eine Erzeugungseinheit für Mikrowellenluftschnittstellenframes (504), die konfiguriert ist zum Erzeugen eines Mikrowellenluftschnittstellenframes in einer Zeitmultiplexmethode, indem Antenne-Träger-I/Q-Abtastwerte, die den Funksignalinformationen, die durch die Zerlegungseinheit für die digitalen Fronthaul-Daten (502) erhalten werden, und den I/Q-Daten der allgemeinen Informationen entsprechen, die durch die Modulationseinheit (503) erhalten werden, einem Zeitmultiplexen unterzogen werden, wobei die Funksignalinformationen und die I/Q-Daten der allgemeinen Informationen in einem Nutzdatenbereich des Mikrowellenluftschnittstellenframes eingekapselt werden, und wobei ein Pilotsignal in einem Mikrowellenoverhead und der Nutzdatenbereich in einem voreingestellten Intervall in einer verschachtelten Weise angeordnet sind; und
eine Mikrowellenübertragungseinheit (505), die konfiguriert ist zum Senden des Mikrowellenluftschnittstellenframes, das von der Erzeugungseinheit für Mikrowellenluftschnittstellenframes (504) erhalten wird, wobei die Erzeugungseinheit für Mikrowellenluftschnittstellenframes (504) insbesondere konfiguriert ist zum:
Erzeugen eines Übertragungstakts des Mikrowellenluftschnittstellenframes und eines Kopfzeilenanzeigesignals des Mikrowellenluftschnittstellenframes;
Einfügen einer Präambel in den Mikrowellenoverhead in einen Kopfzeilenort des Mikrowellenluftschnittstellenframes unter der Steuerung durch den Übertragungstakt des Mikrowellenluftschnittstellenframes und durch das Kopfzeilenanzeigesignal des Mikrowellenluftschnittstellenframes; und
Einkapseln der Funksignalinformationen und der I/Q-Daten der allgemeinen Informationen in dem Nutzdatenbereich des Mikrowellenluftschnittstellenframes, und Anordnen des Pilotsignals und des Nutzdatenbereichs in dem voreingestellten Intervall in einer verschachtelten Weise gemäß einem gleichmäßigen Interpolationsalgorithmus unter der Steuerung durch den Übertragungstakt des Mikrowellenluftschnittstellenframes und durch das Kopfzeilenanzeigesignal des Mikrowellenluftschnittstellenframes.

6. Erste Mikrowellenvorrichtung nach Anspruch 5, die außerdem umfasst:
eine Puffereinheit (506), die konfiguriert ist zum: Puffern der Funksignalinformationen, und Puffern der I/Q-Daten der allgemeinen Informationen, bevor die Erzeugungseinheit für Mikrowellenluftschnittstellenframes (504) die Funksignalinformationen und die I/Q-Daten der allgemeinen Informationen in dem Nutzdatenbereich des Mikrowellenluftschnittstellenframes einkapselt, und das Pilotsignal und den Nutzdatenbereich in dem voreingestellten Intervall in einer verschachtelten Weise gemäß dem gleichmäßigen Interpolationsalgorithmus unter der Steuerung durch den Übertragungstakt des Mikrowellenluftschnittstellenframes und durch das Kopfzeilenanzeigesignal des Mikrowellenluftschnittstellenframes anordnet; wobei die Erzeugungseinheit für Mikrowellenluftschnittstellenframes (504) insbesondere konfiguriert ist zum:
Lesen der Funksignalinformationen und der I/Q-Daten der allgemeinen Informationen, die durch die Puffereinheit (506) gepuffert wurden, Einkapseln der Funksignalinformationen und der I/Q-Daten der allgemeinen Informationen in dem Nutzdatenbereich des Mikrowellenluftschnittstellenframes, und Anordnen des Pilotsignals und des Nutzdatenbereichs in dem voreingestellten Intervall in einer verschachtelten Weise unter der Steuerung durch den Übertragungstakt des Mikrowellenluftschnittstellenframes und durch das Kopfzeilenanzeigesignal des Mikrowellenluftschnittstellenframes.

## Revendications

1. Procédé de transmission de données de liaison frontale numérique, comprenant de :
recevoir (101), par un premier dispositif hyperfréquence, des données de liaison frontale numérique, et obtenir des informations communes pour mettre en œuvre des fonctions et des informations de signal radio à partir des données de liaison frontale numérique ;
effectuer (102), par le premier dispositif hyperfréquence, une modulation d'amplitude en quadrature, QAM, numérique sur les informations communes pour obtenir des données en phase/quadrature, I/Q, des informations communes, dans lequel la modulation QAM n'est pas effectuée sur les informations de signal radio ;
générer (103), par le premier dispositif hyperfréquence, une trame d'interface hertzienne hyperfréquence par un multiplexage par répartition dans le temps en multiplexant dans le temps des échantillons I/ Q d'antenne-porteuse correspondant aux informations de signal radio et aux données I/ Q des informations communes, dans lequel les informations de signal radio et les données I/ Q des informations communes sont encapsulées dans une zone de charge utile de la trame d'interface hertzienne hyperfréquence, et un pilote dans un surdébit hyperfréquence et la zone de charge utile sont agencés à un intervalle prédéfini d'une manière entrelacée ; et
envoyer (104), par le premier dispositif hyperfréquence, la trame d'interface hertzienne hyperfréquence, dans lequel la génération, par le premier dispositif hyperfréquence, d'une trame d'interface hertzienne hyperfréquence par multiplexage par répartition dans le temps sur la base des informations de signal radio et des données I/Q des informations communes comprend spécifiquement de :
générer, par le premier dispositif hyperfréquence, une horloge d'émission de la trame d'interface hertzienne hyperfréquence et un signal d'indication d'en-tête de la trame d'interface hertzienne hyperfréquence ;
insérer, par le premier dispositif hyperfréquence, un préambule dans le surdébit hyperfréquence dans un emplacement d'en-tête de la trame d'interface hertzienne hyperfréquence sous la commande de l'horloge d'émission de la trame d'interface hertzienne hyperfréquence et du signal d'indication d'en-tête de la trame d'interface hertzienne hyperfréquence ; et
encapsuler, par le premier dispositif hyperfréquence, les informations de signal radio et les données I/Q des informations communes dans la zone de charge utile de la trame d'interface hertzienne hyperfréquence, et agencer le pilote et la zone de charge utile à l'intervalle prédéfini d'une manière entrelacée, selon un algorithme d'interpolation uniforme sous la commande de l'horloge d'émission de la trame d'interface hertzienne hyperfréquence et du signal d'indication d'en-tête de la trame d'interface hertzienne hyperfréquence.

2. Procédé selon la revendication 1, dans lequel avant l'encapsulation, par le premier dispositif hyperfréquence, des informations de signal radio et des données I/Q des informations communes dans la zone de charge utile de la trame d'interface hertzienne hyperfréquence, et l'agencement du pilote et de la zone de charge utile à l'intervalle prédéfini d'une manière entrelacée, selon un algorithme d'interpolation uniforme sous la commande de l'horloge d'émission de la trame d'interface hertzienne hyperfréquence et du signal d'indication d'en-tête de la trame d'interface hertzienne hyperfréquence, le procédé comprend en outre de :
mettre en mémoire tampon, par le premier dispositif hyperfréquence, les informations de signal radio ; et
mettre en mémoire tampon, par le premier dispositif hyperfréquence, les données I/Q des informations communes ; et
l'encapsulation, par le premier dispositif hyperfréquence, des informations de signal radio et des données I/Q des informations communes dans la zone de charge utile de la trame d'interface hertzienne hyperfréquence, et l'agencement du pilote et de la zone de charge utile à l'intervalle prédéfini d'une manière entrelacée, selon un algorithme d'interpolation uniforme sous la commande de l'horloge d'émission de la trame d'interface hertzienne hyperfréquence et du signal d'indication d'en-tête de la trame d'interface hertzienne hyperfréquence comprend spécifiquement de :
lire, par le premier dispositif hyperfréquence, les informations de signal radio mises en mémoire tampon et les données I/Q mises en mémoire tampon des informations communes, encapsuler les informations de signal radio et les données I/Q des informations communes dans la zone de charge utile de la trame d'interface hertzienne hyperfréquence, et agencer le pilote et la zone de charge utile à l'intervalle prédéfini d'une manière entrelacée, sous la commande de l'horloge d'émission de la trame d'interface hertzienne hyperfréquence et du signal d'indication d'en-tête de la trame d'interface hertzienne hyperfréquence.

3. Procédé selon la revendication 1 ou 2, dans lequel la génération, par le premier dispositif hyperfréquence, d'une horloge d'émission de la trame d'interface hertzienne hyperfréquence et d'un signal d'indication d'en-tête de la trame d'interface hertzienne hyperfréquence comprend spécifiquement de :
restaurer, par le premier dispositif hyperfréquence, une horloge de données de liaison frontale numérique à partir des données de liaison frontale numérique, et suivre l'horloge de données de liaison frontale numérique pour obtenir l'horloge d'émission de la trame d'interface hertzienne hyperfréquence ;
effectuer, par le premier dispositif hyperfréquence, un traitement de synchronisation de trame sur les données de liaison frontale numérique sous la commande de l'horloge de données de liaison frontale numérique pour générer un signal d'indication d'en-tête des données de liaison frontale numérique ;
retarder, par le premier dispositif hyperfréquence, le signal d'indication d'en-tête des données de liaison frontale numérique sous la commande de l'horloge de données de liaison frontale numérique, de sorte que le signal d'indication d'en-tête retardé des données de liaison frontale numérique soit aligné avec les données I/Q des informations communes ; et
effectuer, par le premier dispositif hyperfréquence, N fois un traitement de répartition en fréquence sur le signal d'indication d'en-tête retardé des données de liaison frontale numérique sous la commande de l'horloge d'émission de la trame d'interface hertzienne hyperfréquence pour obtenir le signal d'indication d'en-tête de la trame d'interface hertzienne hyperfréquence, où N est un entier positif;
ou
générer, par le premier dispositif hyperfréquence, l'horloge d'émission de la trame d'interface hertzienne hyperfréquence en utilisant un oscillateur local ; et
générer, par le premier dispositif hyperfréquence, le signal d'indication d'en-tête de la trame d'interface hertzienne hyperfréquence selon une longueur prédéfinie de la trame d'interface hertzienne hyperfréquence sous la commande de l'horloge d'émission de la trame d'interface hertzienne hyperfréquence.

4. Procédé selon l'une quelconque des revendications 1 à 3, dans lequel avant d'effectuer, par le premier dispositif hyperfréquence, une modulation d'amplitude en quadrature, QAM, numérique sur les informations communes pour obtenir des données en phase/quadrature, I/Q, des informations communes, le procédé comprend en outre de :
effectuer, par le premier dispositif hyperfréquence, un traitement de compression sur les informations communes ; et
l'exécution, par le premier dispositif hyperfréquence, d'une modulation d'amplitude en quadrature, QAM, numérique sur les informations communes pour obtenir des données en phase/quadrature, I/Q, des informations communes comprend spécifiquement de :
effectuer, par le premier dispositif hyperfréquence, une QAM numérique sur les informations communes compressées pour obtenir les données I/Q des informations communes.

5. Premier dispositif hyperfréquence, comprenant :
une unité de réception (501), configurée pour recevoir des données de liaison frontale numérique ;
une unité d'analyse de données de liaison frontale numérique (502), configurée pour obtenir des informations communes pour mettre en œuvre des fonctions et des informations de signal radio à partir des données de liaison frontale numérique reçues par l'unité de réception ;
une unité de modulation (503), configurée pour effectuer une modulation d'amplitude en quadrature, QAM, numérique sur les informations communes obtenues par l'unité d'analyse de données de liaison frontale numérique, pour obtenir des données en phase/quadrature, I/Q, des informations communes, dans lequel l'unité de modulation (503) est configurée pour n'effectuer aucune modulation QAM sur les informations de signal radio ;
une unité de génération de trame d'interface hertzienne hyperfréquence (504), configurée pour générer une trame d'interface hertzienne hyperfréquence par multiplexage par répartition dans le temps en multiplexant dans le temps des échantillons I/ Q d'antenne-porteuse correspondant aux informations de signal radio obtenues par l'unité d'analyse de données de liaison frontale numérique (502) et les données I/ Q des informations communes qui sont obtenues par l'unité de modulation (503), dans lequel les informations de signal radio et les données I/ Q des informations communes sont encapsulées dans une zone de charge utile de la trame d'interface hertzienne hyperfréquence, et un pilote dans un surdébit hyperfréquence et la zone de charge utile sont agencés à un intervalle prédéfini d'une manière entrelacée ; et
une unité d'émission hyperfréquence (505), configurée pour envoyer la trame d'interface hertzienne hyperfréquence obtenue par l'unité de génération de trame d'interface hertzienne hyperfréquence (504), dans lequel l'unité de génération de trame d'interface hertzienne hyperfréquence (504) est spécifiquement configurée pour :
générer une horloge d'émission de la trame d'interface hertzienne hyperfréquence et un signal d'indication d'en-tête de la trame d'interface hertzienne hyperfréquence ;
insérer un préambule dans le surdébit hyperfréquence dans un emplacement d'en-tête de la trame d'interface hertzienne hyperfréquence sous la commande de l'horloge d'émission de la trame d'interface hertzienne hyperfréquence et du signal d'indication d'en-tête de la trame d'interface hertzienne hyperfréquence ; et
encapsuler les informations de signal radio et les données I/Q des informations communes dans la zone de charge utile de la trame d'interface hertzienne hyperfréquence, et agencer le pilote et la zone de charge utile à l'intervalle prédéfini d'une manière entrelacée, selon un algorithme d'interpolation uniforme sous la commande de l'horloge d'émission de la trame d'interface hertzienne hyperfréquence et du signal d'indication d'en-tête de la trame d'interface hertzienne hyperfréquence.

6. Premier dispositif hyperfréquence selon la revendication 5, comprenant en outre :
une unité de mise en mémoire tampon (506), configurée pour : mettre en mémoire tampon les informations de signal radio et mettre en mémoire tampon les données I/Q des informations communes, avant que l'unité de génération de trame d'interface hertzienne hyperfréquence (504) encapsule les informations de signal radio et les données I/Q des informations communes dans la zone de charge utile de la trame d'interface hertzienne hyperfréquence, et agence le pilote et la zone de charge utile à l'intervalle prédéfini d'une manière entrelacée, selon l'algorithme d'interpolation uniforme sous la commande de l'horloge d'émission de la trame d'interface hertzienne hyperfréquence et du signal d'indication d'en-tête de la trame d'interface hertzienne hyperfréquence ; dans lequel l'unité de génération de trame d'interface hertzienne hyperfréquence (504) est spécifiquement configurée pour :
lire les informations de signal radio et les données I/Q des informations communes qui sont mises en mémoire tampon par l'unité de mise en mémoire tampon (506), encapsuler les informations de signal radio et les données I/Q des informations communes dans la zone de charge utile de la trame d'interface hertzienne hyperfréquence, et agencer le pilote et la zone de charge utile à l'intervalle prédéfini d'une manière entrelacée, sous la commande de l'horloge d'émission de la trame d'interface hertzienne hyperfréquence et du signal d'indication d'en-tête de la trame d'interface hertzienne hyperfréquence.
